(19) Europäisches Patentamt
European Patent Office
Office européen des brevets

(11) **EP 2 876 714 B1**

(12) **EUROPEAN PATENT SPECIFICATION**

(45) Date of publication and mention
of the grant of the patent:
**30.08.2017 Bulletin 2017/35**

(51) Int Cl.:
*H01M 8/1018* (2016.01)    *H01M 4/88* (2006.01)
*H01M 4/86* (2006.01)    *H01M 8/0234* (2016.01)

(21) Application number: **13820352.6**

(22) Date of filing: **18.07.2013**

(86) International application number:
**PCT/JP2013/069518**

(87) International publication number:
**WO 2014/014055 (23.01.2014 Gazette 2014/04)**

(54) **POROUS ELECTRODE SUBSTRATE, METHOD FOR MANUFACTURING SAME, MEMBRANE-ELECTRODE ASSEMBLY, AND SOLID-POLYMER FUEL CELL**

PORÖSES ELEKTRODENSUBSTRAT, HERSTELLUNGSVERFAHREN DAFÜR, MEMBRANELEKTRODENANORDNUNG UND FESTPOLYMERBRENNSTOFFZELLE

SUBSTRAT D'ÉLECTRODE POREUX, PROCÉDÉ DE FABRICATION DE CELUI-CI, ENSEMBLE MEMBRANE-ÉLECTRODE, ET PILE À COMBUSTIBLE À POLYMÈRE SOLIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.07.2012 JP 2012161362**

(43) Date of publication of application:
**27.05.2015 Bulletin 2015/22**

(73) Proprietor: **Mitsubishi Chemical Corporation Tokyo 100-8251 (JP)**

(72) Inventor: **SUMIOKA Kazuhiro
Toyohashi-shi
Aichi 440-8601 (JP)**

(74) Representative: **Hoffmann Eitle
Patent- und Rechtsanwälte PartmbB
Arabellastraße 30
81925 München (DE)**

(56) References cited:
WO-A1-2011/065349    WO-A1-2012/099036
JP-A- H11 204 114    JP-A- S52 119 477
JP-A- 2001 283 865    JP-A- 2012 199 225

**Description**

TECHNICAL FIELD

The present invention relates to a porous electrode substrate that can be used in fuel cells and the like, a method for manufacturing the same, and a membrane-electrode assembly and a solid polymer fuel cell, both including this porous electrode substrate.

BACKGROUND ART

Regarding a gas diffusion electrode substrate that is installed in fuel cells, in order to increase mechanical strength, a porous electrode substrate formed from a paper-like carbon/carbon composite obtained by papermaking short carbon fibers, binding the fibers with an organic polymer, baking this at a high temperature, and thereby carbonizing the organic polymer, has been hitherto used (see Patent Document 1).

Furthermore, for the purpose of increasing the electrical conductivity of a gas diffusion electrode substrate, there has been suggested a substrate obtained by adding a carbon powder to a resin that can be carbonized (see Patent Document 2).

For the purpose of cost reduction for a gas diffusion electrode substrate, there has been suggested a porous electrode substrate obtained by papermaking short oxidized fibers, subsequently baking the resultant at a high temperature, and thereby carbonizing the short oxidized fibers (see Patent Document 3).

There has also been suggested a gas diffusion layer for fuel cells for the use in a gas diffusion electrode substrate, which includes a mat containing plural carbon fibers; and plural acrylic pulp fibers incorporated in the carbon fiber mat, and in which these acrylic pulp fibers are cured after being incorporated into the carbon fiber mat and are carbonized (see Patent Document 4).

Furthermore, for the purpose of cost reduction for an electrode substrate, there has been suggested a method for manufacturing a porous electrode substrate that is not carbonized, the method including binding short carbon fibers with a split fiber having a fibrillated portion formed from a water-repellant material having a contact angle of 80° or higher and an electrically conductive material (see Patent Document 5).

There has also been suggested a porous electrode substrate including, as a gas diffusion electrode substrate, a non-woven fabric network structure of carbon fiber that has not be graphitized, and a mixture of graphite particles and a hydrophobic polymer disposed within the non-woven fabric network structure, in which the longest dimension of at least 90% of the graphite particles is less than 100 $\mu$m (see Patent Document 6). Patent Document 7 discloses a porous electrode substrate that has high sheet strength, low production cost, and sufficient gas permeability and electrical conductivity. The porous substrate is produced by producing a precursor sheet including short carbon fibers, and one or more types of short precursor fibers that undergo oxidation and/or one or more types of fibrillary precursor fibers that undergo oxidation, all of which are dispersed in a two-dimensional plane, subjecting the precursor sheet to entanglement treatment to form a three-dimensional entangled structure, then impregnating the precursor sheet with carbon powder and fluorine-based resin, and further heat treating the precursor sheet at a temperature of 150°C or higher and lower than 400°C.

CITATION LIST

PATENT DOCUMENT

Patent Document 1: WO 2001/056103
Patent Document 2: JP 2006-143478 A
Patent Document 3: WO 2002/042534
Patent Document 4: JP 2007-273466 A
Patent Document 5: JP 2004-363018 A
Patent Document 6: JP 2008-503043 W
Patent Document 7: EP 2 506 352 A1

DISCLOSURE OF THE INVENTION

PROBLEM TO BE SOLVED BY THE INVENTION

However, although the porous electrode substrate (porous carbon electrode substrate) disclosed in Patent Document 1 has sufficient gas permeability and electrical conductivity, since the manufacturing process is complicated, there is a tendency that high manufacturing cost is required.

The porous electrode substrate disclosed in Patent Document 2 has excellent properties in terms of mechanical strength, surface smoothness and gas permeability, and has improved electrical conductivity as a result of addition of carbon fiber; however, there is a tendency that the manufacturing process is complicated, and high manufacturing cost is required.

The carbon fiber sheet (porous electrode substrate) disclosed in Patent Document 3 enables cost reduction. However, according to the manufacturing method descried in the same document, there are occasions in which shrinkage may occur to a large extent at the time of baking, and there are occasions in which the thickness of the porous electrode substrate thus obtainable may be uneven, or the sheet may have large corrugation. If a porous electrode substrate has shrinkage or an uneven thickness, the performance may not be uniform depending on the site of the substrate, and the product quality is lowered. Furthermore, if a porous electrode substrate has large corrugation, contact with other members within a fuel cell may be insufficiently achieved, and there is a problem that the performance and durability of the fuel cell may be deteriorated.

The porous electrode substrate disclosed in Patent Document 4 enables cost reduction. However, the acrylic pulp used therein may have a low carbonization ratio at the time of carbonization, so that it is demanded to add a large amount of acrylic pulp in order to increase handleability.

The porous electrode substrate disclosed in Patent Document 5 does not undergo a carbonization process during the manufacturing process, and enables cost reduction to a large extent. However, since the split fiber having a fibrillated portion formed from a water-repellent material and an electrically conductive material, which binds between short carbon fibers, may not have sufficient electrical conductivity, there are occasions in which the porous electrode substrate may have low electrical conductivity.

The porous electrode substrate disclosed in Patent Document 6 is formed from short carbon fibers, a carbon powder and a fluorine-based resin, and enables cost reduction because a carbonization process of baking at a high temperature can be omitted from the manufacturing process. However, the porous electrode substrate lacks a component that binds the short carbon fibers, and it is necessary to use large amounts of the carbon powder and the fluorine-based resin in order to increase the sheet strength and the electrical conductivity in the thickness. Therefore, there is a problem that it is difficult to achieve a balance between electrical conductivity and gas diffusibility.

An object of the present invention is to overcome the problems described above, and to provide a porous electrode substrate which has high sheet strength and sufficient gas permeability and electrical conductivity, and requires low manufacturing cost, and a method for manufacturing the same. Another object of the present invention is to provide a membrane-electrode assembly and a solid polymer fuel cell, both of which use this porous electrode substrate.

MEANS FOR SOLVING PROBLEM

The inventors of the present invention found that the problems described above may be solved by claims 1 and 10.

Furthermore, according to another aspect, embodiments of the present invention are as follows.

A method for manufacturing a porous electrode substrate, the method including: (1) a step of manufacturing a precursor sheet in which a short carbon fiber (A) and a fiber (b) formed from a polymer having a softening point of 250°C or higher but lower than 400°C and a particulate substance having a melting point of 400°C or higher are dispersed in a planar direction; (2) a step of impregnating the precursor sheet with a carbon powder (C2) and a fluorine-based resin; and (3) a step of heat treating the precursor sheet obtained after the step (2) at a temperature of 250°C or higher but lower than 400°C in the presence of oxygen.

The manufacturing method described in any one of the above-described items, wherein the fiber (b) formed from a polymer having a softening point of 250°C or higher but lower than 400°C and containing a particulate substance having a melting point of 400°C or higher, is an oxidized fiber precursor fiber formed from a polymer having a softening point of 250°C or higher but lower than 400°C and containing a particulate substance having a melting point of 400°C or higher.

The manufacturing method described in any one of the above-described items, wherein the fiber (b) formed from a polymer having a softening point of 250°C or higher but lower than 400°C and containing a particulate substance having a melting point of 400°C or higher, is an oxidized fiber precursor short fiber (b1) formed from a polymer having a softening point of 250°C or higher but lower than 400°C and containing a particulate substance having a melting point of 400°C or higher, and/or a fibrillar oxide precursor fiber (b2) formed from a polymer having a softening point of 250°C or higher but lower than 400°C and containing a particulate substance having a melting point of 400°C or higher.

A porous electrode substrate, formed from a melting point short carbon fiber (A), an oxidized fiber (B) containing a particulate substance having a melting point of 400°C or higher, and a fluorine-based resin containing a carbon powder (C2), wherein when the porous electrode substrate having a size of 250 mm in length and 250 mm in width is placed on a flat plate, the difference between the maximum value and the minimum value of the height of the porous electrode substrate from the flat plate is 2 mm or less.

Furthermore, according to still another aspect, embodiments of the present invention are as follows.

A method for manufacturing a porous electrode substrate, the method including: (1) a step of manufacturing a precursor sheet in which a short carbon fiber (A) and an oxidized fiber precursor fiber (b) containing a carbon powder (C1) are dispersed in a planar direction; (2) a step of impregnating the precursor sheet with a carbon powder (C2) and a fluorine-based resin; and (3) a step of heat treating the precursor sheet obtained after the step (2) at a temperature of 150°C or higher but lower than 400°C.

Furthermore, according to still another aspect, there is provided a porous electrode substrate, in which the pieces of a short carbon fiber (A) are joined to one another by means of an oxidized fiber (B) containing a carbon powder (C1), and the pieces of the short carbon fiber (A) are joined to one another by means of a fluorine-based resin containing a carbon powder (C2).

A porous electrode substrate, in which the pieces of a short carbon fiber (A) are joined to one another by means of a carbon powder (C1), and the pieces of the short carbon fiber (A) and an oxidized fiber (B) containing the carbon powder (C1) are joined to one another by means of a fluorine-based resin containing a carbon powder (C2).

A porous electrode substrate, in which the pieces of a short carbon fiber (A) are joined to one another by means of an oxidized fiber (B) containing a carbon powder (C1), the pieces of the short carbon fiber (A) are joined to one another by means of a fluorine-based resin containing a carbon powder (C2), and the pieces of the short carbon fiber (A) and an oxidized fiber (B) containing the carbon powder (C1) are also joined to one another by means of the fluorine-based resin containing a carbon powder (C2).

EFFECT OF THE INVENTION

According to the present invention, a porous electrode substrate which has high sheet strength and sufficient gas permeability and electrical conductivity and requires low manufacturing cost, can be obtained. Furthermore, according to the method for manufacturing a porous electrode substrate of the present invention, a porous electrode substrate having the above-described advantages can be manufactured at low cost. According to the present invention, a membrane-electrode assembly and a solid polymer fuel cell, both of which use a porous electrode substrate having the above-described advantages, can be provided.

BRIEF DESCRIPTION OF DRAWINGS

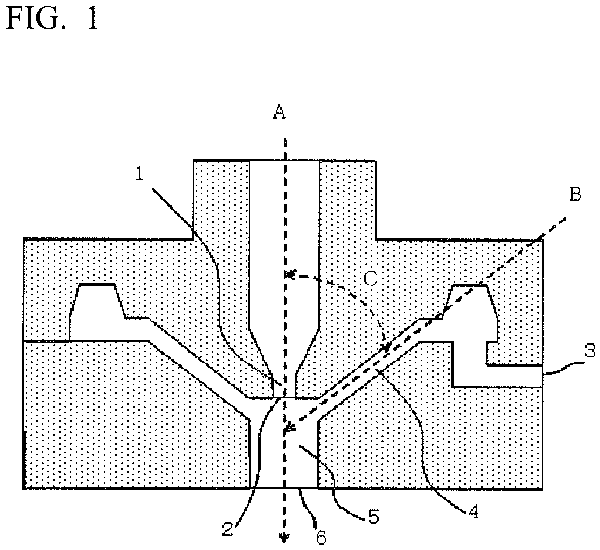

Fig. 1 is a schematic cross-sectional diagram illustrating an exemplary nozzle that can be used to manufacture a carbon precursor fiber having a structure in which a large number of fibrils are branched.

MODE(S) FOR CARRYING OUT THE INVENTION

Hereinafter, the present invention will be specifically described by way of exemplary embodiments. In the following descriptions, the "fiber (b) containing a particulate substance having a melting point of 400°C or higher and containing a polymer having a softening point of 250°C or higher but lower than 400°C" may also be described as "fiber (b) containing a particulate substance having a melting point of 400°C or higher" or "fiber (b)". In the following descriptions, the "oxidized fiber (B) containing a particulate substance having a melting point of 400°C or higher" may also be described as "oxidized fiber (B)".

<Porous electrode substrate>

The porous electrode substrate according to the present exemplary embodiment is approximately configured to include a short carbon fiber (A), an oxidized fiber (B) containing a particulate substance having a melting point of 400°C or higher, and a fluorine-based resin containing a carbon powder (C2). The porous electrode substrate according to the exemplary embodiment has a structure such as follows, for example, when the fiber (b) is "a precursor fiber of an oxidized fiber (B) containing a particulate substance having a melting point of 400°C or higher", which is formed from a polymer having a softening point of 250°C or higher but lower than 400°C and a particulate substance having a melting point of 400°C or higher, mainly through the various steps in the manufacturing method that will be described below.

The term being joined as used in the following descriptions means that different compounds are closely adhered under the action of an intermolecular force other than molecular bonding, or the like. The porous electrode substrate according to the present exemplary embodiment can adopt the following structures (I) to (III) and structures combining these. Meanwhile, the porous electrode substrate may also adopt a structure other than the structures of (I) to (III) described below.

(I) A structure having a site formed as the pieces of the short carbon fiber (A) are mutually joined by means of the oxidized fiber (B) containing a particulate substance having a melting point of 400°C or higher, and the pieces of the short carbon fiber (A) are mutually joined by means of the fluorine-based resin.

(II) A structure having a site formed as the pieces of the short carbon fiber (A) are mutually joined by means of the oxidized fiber (B) containing a particulate substance having a melting point of 400°C or higher, and the pieces of the oxidized fiber (B) are mutually joined by means of the fluorine-based resin.

(III) A structure having a site formed as the pieces of the short carbon fiber (A) are mutually joined by means of the oxidized fiber (B) containing a particulate substance having a melting point of 400°C or higher, and the pieces of the short carbon fiber (A) and the oxidized fiber (B) are mutually joined by the fluorine-based resin.

The porous electrode substrate of the present exemplary embodiment may form a three-dimensional entangled structure. In the present exemplary embodiment, the porous electrode substrate being a three-dimensional entangled structure implies a structure in which the pieces of the short carbon fiber (A) and the oxidized fiber (B) containing a particulate substance having a melting point of 400°C or higher are joined by being mutually entangled by the entangling treatment that will be described below, and thereby the pieces of the short carbon fiber (A) and the oxidized fiber (B) containing a particulate substance having a melting point of 400°C or higher are entangled toward every direction of the three-dimensional direction of the porous electrode substrate so that, for example, the longitudinal direction of the oxidized fiber (B) is extended (oriented), if the porous electrode substrate is in a sheet form or a plate form, not only in the planar direction of the porous electrode substrate but also in the thickness direction.

The shape of the porous electrode substrate can be selected as necessary from the shapes that are known in the field of fuel cells, and for example, a shape such as a sheet form or a spiral form can be adopted.

The porous electrode substrate of the present exemplary embodiment has very small corrugation. Small corrugation means that, for example, when the porous electrode substrate is formed into a sheet form, the planar direction of the substrate is flat, with fewer convexities and concavities (wrinkles, or curves in the thickness direction of the sheet). More specifically, when a sheet-like porous electrode substrate having a size of 250 mm in length and 250 mm in width is placed on a flat plate, the difference between the maximum value and the minimum value of the height of the porous electrode substrate from the flat plate is 2 mm or less, and preferably 1 mm or less. This corrugation is small because, as will be described below, since a heat treatment can be carried out at 250°C to 400°C in the manufacturing process, the problem of the occurrence of corrugation due to shrinkage of the porous electrode substrate as a result of a heat treatment at a high temperature, is solved. The porous electrode substrate of the present exemplary embodiment is advantageous in that since the corrugation is small, contact with other members in a fuel cell is sufficiently achieved, and the performance and durability of the fuel cell are enhanced.

The basis weight of the sheet-like porous electrode substrate is preferably from 15 $g/m^2$ to 100 $g/m^2$. The basis weight is weight per unit area. When the basis weight is in this range, satisfactory gas permeability and handleability are obtained. Furthermore, the porosity ratio of the sheet-like porous electrode substrate is preferably from 50% to 90%. The porosity ratio is calculated by, for example, using a porosimeter or a densitometer. When the porosity ratio is in this range, satisfactory gas permeability and electrical conductivity are obtained. Furthermore, the thickness of the sheet-like porous electrode substrate is preferably from 50 $\mu$m to 300 $\mu$m. When the thickness is in this range, satisfactory gas permeability and handleability are obtained.

Porousness of a porous electrode substrate means that the surface and the interior are porous, and the substrate has a high porosity ratio such as described above.

Furthermore, the gas permeability of the porous electrode substrate is preferably from 100 $ml/hr/cm^2/mmAq$ to 30,000 $ml/hr/cm^2/mmAq$. When the gas permeability is in this range, satisfactory gas diffusibility inside a fuel cell that uses the porous electrode substrate can be exhibited.

Furthermore, the electrical resistance in the thickness of the porous electrode substrate (penetration direction resistance) is preferably 50 $m\Omega \cdot cm^2$ or less. In regard to the electrical resistance (penetration direction resistance), for example, when measurement is made for a sheet-like porous electrode substrate, the porous electrode substrate is disposed between electrode plates, and the resistance value at the time of passing an electric current is measured while pressure is applied (for example, approximately 1 MPa) so that the porous electrode substrate adheres closely to the electrode plates. Then, the penetration direction resistance is obtained by the formula: penetration direction resistance $(m\Omega \cdot cm^2)$ = measured resistance value $(m\Omega)$ × sample area $(cm^2)$.

The gas permeability of the porous electrode substrate and the gas permeability per unit thickness of the porous electrode substrate are calculated from the gas permeability and thickness. A measurement example for the gas permeability may be the measurement method according to ISO-5636-5. An example of this measurement method is a technique of measuring the time taken for 200 mL of air to penetrate a sample using a Gurley densometer, and calculating the gas permeability (ml/hr/cm$^2$/mmAq).

Furthermore, the gas permeability per unit thickness of the porous electrode substrate is preferably from 750 ml/hr/cm$^2$/mmAq·mm to 2000 ml/hr/cm$^2$/mmAq·mm. When the gas permeability per unit thickness is in this range, satisfactory gas diffusibility inside a fuel cell that uses the porous electrode substrate can be exhibited.

Furthermore, the penetration direction resistance per unit thickness of the porous electrode substrate is preferably 0.18 mΩ·cm$^2$/mm or less. When the penetration direction resistance per unit thickness is in this range, manifestation of satisfactory electrical conductivity inside a fuel cell that uses the porous electrode substrate is enabled. In addition, the ratio of the gas permeability and the penetration direction resistance is preferably 260 ml/hr/cm$^2$/mmAq/(mΩ·cm$^2$) or more. When the ratio is in this range, a balance can be achieved between gas diffusibility and electrical conductivity of the fuel cell that uses the porous electrode substrate. Furthermore, it is more preferable that all of the three preferred ranges of the gas permeability per unit thickness, the penetration direction resistance per unit thickness, and the ratio of the gas permeability and the penetration direction resistance are satisfied, because the advantages described above can all be obtained.

More specific preferred examples of the porous electrode substrate of the present exemplary embodiment include the following items (i) to (v).

(i) A porous electrode substrate formed from a short carbon fiber (A), an oxidized fiber (B) containing a particulate substance having a melting point of 400°C or higher, and a fluorine-based resin containing a carbon powder (C2), in which when the porous electrode substrate is placed on a flat plate to have a size of 250 mm in length and 250 mm in width, the difference between the maximum value and the minimum value of the height from the flat plate is 2 mm or less.

(ii) A structure having a site in which the pieces of a short carbon fiber (A) are mutually joined by means of an oxidized fiber (B) containing a particulate substance having a melting point of 400°C or higher and containing a polymer having a softening point of 250°C or higher but lower than 400°C, and a site in which the pieces of the short carbon fiber (A) are mutually joined by means of a fluorine-based resin containing a carbon powder (C2).

(iii) A structure having a site in which the pieces of a short carbon fiber (A) and an oxidized fiber (B) are mutually joined by the fluorine-based resin.

(iv) A structure having a site in which the pieces of a short carbon fiber (A) are mutually joined by means of an oxidized fiber (B) containing a particulate substance having a melting point of 400°C or higher and containing a polymer having a softening point of 250°C or higher but lower than 400°C, a site in which the pieces of the short carbon fiber (A) are mutually joined by means of a fluorine-based resin containing a carbon powder (C2), and a site in which the pieces of the short carbon fiber (A) and the oxidized fiber (B) are mutually joined by the fluorine-based resin.

(v) The porous electrode substrate according to any one of the above-described items, in which the gas permeability per unit thickness is from 750 ml/hr/cm$^2$/mmAq·mm to 2000 ml/hr/cm$^2$/mmAq·mm, the penetration direction resistance per unit thickness is 0.18 mΩ·cm$^2$/mm or less, and the ratio of the gas permeability and the penetration direction resistance is 260 ml/hr/cm$^2$/mmAq/(mΩ·cm$^2$) or more.

Meanwhile, since the method for manufacturing a porous electrode substrate according to the present exemplary embodiment does not include a carbonization process at 1000°C or higher, the manufacturing cost is low. In other words, since the porous electrode substrate according to the present exemplary embodiment can be manufactured without going through a carbonization process at 1000°C or higher, a porous electrode substrate that requires low manufacturing cost is obtained. Furthermore, the porous electrode substrate of the present exemplary embodiment does not include a carbonization product of a resin that joins (binds) the short carbon fiber (A). Therefore, since the porous electrode substrate of the present invention has the pieces of the short carbon fiber (A) joined by the flexible oxidized fiber (B) containing a particulate substance having a melting point of 400°C or higher and the fluorine-based resin containing a carbon powder (C2), as compared with conventional porous electrode substrates in which the short carbon fiber (A) is bound by a carbonization product of a resin having a small amount of mechanical deformation, the porous electrode substrate is highly flexible, and the amount of deformation inside a fuel cell can be made larger.

Hereinafter, the various constituent elements of the porous electrode substrate of the present exemplary embodiment will be explained in more detail.

<Short carbon fiber (A)>

A short carbon fiber (A) dispersed in a precursor sheet is one of the fibers that constitute the porous electrode substrate. Examples of the short carbon fiber (A) include products obtained by cutting carbon fibers such as a polyacrylonitrile-based carbon fiber (hereinafter, referred to as "PAN-based carbon fiber"), a pitch-based carbon fiber and a rayon-based carbon fiber, to a predetermined fiber length. The short carbon fiber (A) is preferably a PAN-based carbon fiber. When a PAN-based carbon fiber is used for the short carbon fiber (A), the porous electrode substrate acquires mechanical strength.

The average fiber length of the short carbon fiber (A) is preferably from 2 mm to 12 mm from the viewpoint of dispersibility. Furthermore, the average fiber diameter of the short carbon fiber (A) is more preferably from 3 $\mu$m to 9 $\mu$m. When the average fiber diameter is in this range, more satisfactory dispersibility of the short carbon fiber is obtained, and the manufacturing cost is also satisfactory. The average fiber diameter of the short carbon fiber (A) is more preferably from 4 $\mu$m to 8 $\mu$m. When the average fiber diameter is in this range, the porous electrode substrate has satisfactory smoothness. Meanwhile, the average fiber diameter can be measured by optical microscopy or electron microscopy.

The short carbon fiber (A), which is one of the fibers that constitute the porous electrode substrate, is dispersed within the porous electrode substrate. Here, "dispersion within the porous electrode substrate" means that the fiber direction (longitudinal direction) of the short carbon fiber (A) may exist approximately in parallel to the surface of the sheet-like porous electrode substrate, or may exist in the thickness direction of the porous electrode substrate. Furthermore, the orientation direction of the short carbon fiber (A) that is approximately parallel to the surface of this sheet-like porous electrode substrate may be substantially random, or may have increasing orientation properties in a particular direction. The short carbon fiber (A) exists while maintaining a nearly linear form (for example, the fiber shape is linear) within the porous electrode substrate. Furthermore, the pieces of the short carbon fiber (A) within the porous electrode substrate are not directly chemically bonded or joined, but are joined by the oxidized fiber (B) containing a particulate substance having a melting point of 400°C or higher.

The percentage content of the short carbon fiber (A) in the porous electrode substrate is preferably from 40% by mass to 90% by mass relative to the sum of the short carbon fiber (A) and the oxidized fiber (B) containing a particulate substance having a melting point of 400°C or higher. In addition, the percentage content of the short carbon fiber (A) is more preferably from 50% by mass to 90% by mass relative to the total mass of the short carbon fiber (A) and the oxidized fiber (B) containing a particulate substance having a melting point of 400°C or higher, in order to maintain sufficient mechanical strength of the porous electrode substrate and to obtain a sufficient penetration direction resistance.

<Oxidized fiber (B) containing particulate substance having melting point of 400°C or higher>

The oxidized fiber (B) containing a particulate substance having a melting point of 400°C or higher is a fiber that joins the pieces of the short carbon fiber (A) in the porous electrode substrate. The oxidized fiber (B) exists, within the porous electrode substrate, in a state of adopting a bent form or a curved form in the joint portion, which is the site for joining the pieces of the short carbon fiber (A). An oxidized fiber means that when a fiber is subjected to heating and pressurization, the polymer used therein undergoes a reaction of bonding to oxygen, and is oxidized. The oxidized fiber (B) containing a particulate substance having a melting point of 400°C or higher may form a fiber structure in which the fiber strands respectively have an almost linear form only, or may form a network structure in which linear-shaped fiber strands are bonded in a mutually intersecting state and form a network. It is preferable that the oxidized fiber (B) forms a network structure that is mutually entangled not only in the planar direction of the porous electrode substrate but also in the thickness direction. In this structure, the porous electrode substrate has satisfactory handleability and electrical conductivity.

The percentage content of the oxidized fiber (B) containing a particulate substance having a melting point of 400°C or higher in the porous electrode substrate is preferably from 10% by mass to 60% by mass relative to the total mass of the short carbon fiber (A) and the oxidized fiber (B). In addition, the percentage content of the oxidized fiber (B) is more preferably from 10% by mass to 50% by mass relative to the sum of the short carbon fiber (A) and the oxidized fiber (B). When the percentage content is in this range, sufficient mechanical strength of the porous electrode substrate is maintained, and sufficient penetration direction resistance is obtained.

The oxidized fiber (B) containing a particulate substance having a melting point of 400°C or higher is obtained as a fiber (b) containing a particulate substance having a melting point of 400°C or higher is oxidized by a heat treatment (oxidation treatment) in the step (3) that will be described below. Therefore, the oxidized fiber (B) is an oxidized fiber derived from the fiber (b). The oxidized fiber (B) has a particulate substance having a melting point of 400°C or higher incorporated therein. As will be described below, due to the presence of this particulate substance, the porous electrode substrate acquires satisfactory electrical conductivity and productivity. The content of the particulate substance having a melting point of 400°C or higher in the oxidized fiber (B) is preferably from 10% by mass to 90% by mass relative to the total mass including the polymer and the like of the oxidized fiber (B).

The fiber (b) will be described later. Furthermore, the particulate substance having a melting point of 400°C or higher that can be used in the present exemplary embodiment will also be described later.

The oxidized fiber (B) containing a particulate substance having a melting point of 400°C or higher is a fiber obtained by subjecting a fiber (b) containing a particulate substance having a melting point of 400°C or higher that will be described below, to an oxidation treatment, and contains a polymer obtained by subjecting a polymer (polymerization product) that can be used in the fiber (b), to an oxidation treatment. Examples of such a polymer include, as will be described below, oxidation-treated polymers of an acrylic polymer, a cellulose-based polymer, and a phenolic polymer.

<Precursor sheet>

In the present exemplary embodiment, as will be described below, a precursor sheet can be manufactured by the <(1) step of manufacturing a precursor sheet in which a short carbon fiber (A) and a fiber (b) containing a particulate substance having a melting point of 400°C or higher are dispersed in a planar direction>. This precursor sheet is a sheet that serves as a precursor of the porous electrode substrate. The precursor sheet obtainable by the step (1) that will be described below is a precursor sheet in which a short carbon fiber (A) and a fiber (b) containing a particulate substance having a melting point of 400°C or higher are dispersed. The precursor sheet contains the short carbon fiber (A) and the fiber (b) containing a particulate substance having a melting point of 400°C or higher. Meanwhile, it is preferable that the precursor sheet of the present invention does not contain a sheet-making binder such as polyvinyl alcohol (PVA) or polyvinyl acetate, from the viewpoint of reducing the manufacturing cost and manifesting electrical conductivity.

<Fiber (b) containing polymer having a softening point of 250°C or higher but lower than 400°C and particulate substance having a melting point of 400°C or higher>

The relevant fiber (b) essentially contains a polymer having a softening point of 250°C or higher but lower than 400°C. When it is said that the fiber (b) contains a polymer having a softening point of 250°C or higher but lower than 400°C, this includes the concept that the fiber is substantially composed of this polymer (composed mainly of this polymer except for impurities; hereinafter, simply referred to as "formed from this polymer"), or a mixture including this polymer has a softening point adjusted to 250°C or higher but lower than 400°C. Since the polymer included in the fiber (b) has a softening point of 250°C or higher but lower than 400°C, when the pieces of the short carbon fiber (A) are joined in the process of performing a heat treatment at a temperature of 250°C or higher but lower than 400°C in the presence of oxygen as will be described below, the fiber shape can be maintained, and thereby corrugation of the porous electrode substrate can be suppressed. If the softening point of the polymer contained in the fiber (b) is lower than 250°C, during the process of performing a heat treatment at a temperature of 250°C or higher but lower than 400° in the presence of oxygen, the fiber shape cannot be maintained, shrinkage of the fiber occurs, and large corrugation occurs in the porous electrode substrate. Furthermore, when the polymer contained in the fiber (b) has a softening point of 400°C or higher, during the process of performing a heat treatment at a temperature of 250°C or higher but lower than 400°C in the presence of oxygen, the short carbon fiber (A) cannot be joined, the resistance of the porous electrode substrate is increased, and mechanical strength is decreased.

In the fiber (b) containing a polymer having a softening point of 250°C or higher but lower than 400°C and containing a particulate substance having a melting point of 400°C or higher, one strand of the fiber contains a particulate substance having a melting point of 400°C or higher. The dispersed state of the particulate substance having a melting point of 400°C is not particularly limited, and the particulate substance may be dispersed uniformly in the fiber, or may be localized at the core part or the fiber surface part.

The porous electrode substrate of the present exemplary embodiment is manufactured according to the manufacturing method described below, and is manufactured by heat treating a precursor sheet at a temperature of from 250°C to below 400°C in the presence of oxygen as will be described below in the step (3) of the manufacturing method. For that reason, in order for the porous electrode substrate obtained after the relevant heat treatment process to maintain the shape of a sheet, and in order to prevent the occurrence of corrugation, it is essential that the fiber that constitutes the fiber (b) as a constituent component of the precursor sheet contains a polymer (substantially formed from this polymer) having a softening point of 250°C or higher but lower than 400°C. Specific examples of the fiber component that constitutes the fiber (b) include an oxidized fiber precursor fiber containing a polymer having a softening point of 250°C or higher but lower than 400°C that will be described below, and a heat resistant fiber containing a polymer having a softening point of 250°C or higher but lower than 400°C. From the viewpoint of reducing the manufacturing cost, the fiber component that constitutes the fiber (b) is preferably an oxidized fiber precursor fiber containing a polymer having a softening point of 250°C or higher but lower than 400°C.

Meanwhile, if the fiber containing a polymer having a softening point of 250°C or higher but lower than 400°C does not contain a particulate substance having a melting point of 400°C or higher, the fiber undergoes a large deformation due to the heat treatment at a temperature of from 250°C to below 400°C in the step (2) of the manufacturing method that will be described below. If the fiber as a constituent component of the precursor sheet undergoes a large deformation, when the porous electrode substrate is manufactured, there may be a problem of corrugation in the porous electrode substrate. Therefore, in the present exemplary embodiment, when a particulate substance having a melting point of 400°C or higher is incorporated into the fiber containing a polymer having a softening point of 250°C or higher but lower than 400°C, shrinkage of the fiber (b) caused by the large deformation described above can be prevented, and the occurrence of corrugation of the porous electrode substrate can be suppressed.

Regarding the fiber (b) containing a particulate substance having a melting point of 400°C or higher, it is preferable to use either one or both of an oxidized fiber precursor short fiber (b1) containing a polymer having a softening point of 250°C or higher but lower than 400°C and containing a particulate substance having a melting point of 400°C or higher that will be described below; and a fibrillar oxidized fiber precursor fiber (b2) containing a polymer having a softening point of 250°C or higher but lower than 400°C and containing a particulate substance having a melting point of 400°C or higher that will be described below. Meanwhile, in the following descriptions, the "oxidized fiber precursor short fiber (b1) containing a polymer having a softening point of 250°C or higher but lower than 400°C and containing a particulate substance having a melting point of 400°C or higher" may be referred to as "oxidized fiber precursor short fiber (b) containing a particulate substance having a melting point of 400°C or higher" or "oxidized fiber precursor short fiber (b1)". Furthermore, in the following descriptions, the "fibrillar oxidized fiber precursor fiber (b2) containing a polymer having a softening point of 250°C or higher but lower than 400°C and containing a particulate substance having a melting point of 400°C or higher" may be referred to as "fibrillar oxidized fiber precursor fiber (b2) containing a particulate substance having a melting point of 400°C or higher" or "fibrillar oxidized fiber precursor fiber (b2)".

For the fiber (b) containing a particulate substance having a melting point of 400°C or higher, only one kind of fiber in terms of constituent material or physical characteristics may be used as the fiber (b) containing a particulate substance having a melting point of 400°C or higher. Furthermore, plural fibers having different constituent materials or physical characteristics may also be used in combination as this fiber (b) containing a particulate substance having a melting point of 400°C or higher. For example, even for fibers manufactured using the same material as the constituent materials of the particulate substance and the polymer, fibers having different mass ratios of the particulate substance and the polymer, fibers having different values of freeness evaluation (measurement made by an evaluation of freeness as will be described below), or fibers having different fiber diameters may be used in combination of plural kinds. Furthermore, plural kinds of fibers having different kinds of polymers or different constituent materials for the particulate substance (kind of the carbon powder or the like) may be used in combination. Also, an oxidized fiber precursor short fiber (b1) containing a particulate substance having a melting point of 400°C or higher and a fibrillar oxidized fiber precursor fiber (b2) containing a particulate substance having a melting point of 400°C or higher may be used in combination. From the viewpoint of handleability of the precursor sheet, it is more preferable to use a fibrillar oxidized fiber precursor fiber (b2) containing a particulate substance having a melting point of 400°C or higher as the fiber (b) containing a particulate substance having a melting point of 400°C or higher.

The fiber (b) containing a particulate substance having a melting point of 400°C or higher can be configured to contain a particulate substance having a melting point of 400°C or higher and a polymer. The content of the particulate substance having a melting point of 400°C or higher in this fiber (b) containing a particulate substance having a melting point of 400°C or higher is preferably from 10% by mass to 90% by mass relative to the total mass of the fiber (b). When the content is in this range, sufficient fiber strength and sufficient electrical conductivity after heat treatment of the fiber (b) are obtained. Furthermore, it is preferable that the upper limit of the content of the particulate substance having a melting point of 400°C or higher is higher in the extent that spinning can be achieved; however, from the viewpoint of spinning stability in the manufacturing stage of the fiber, the content of the particulate substance is particularly preferably 70% by mass or less. That is, the content is particularly preferably from 10% by mass to 70% by mass relative to the total mass of the fiber (b).

The polymer used in this fiber (b) containing a particulate substance having a melting point of 400°C or higher is essentially a polymer having a softening point of 250°C or higher but lower than 400°C, but it is preferable that the residual mass in the heat treatment process (step (2) described below) is 60% by mass or more. When the residual mass is in this mass range, sufficient mechanical strength of the porous electrode substrate can be maintained, and the environmental load can be decreased. Furthermore, it is preferable that the residual mass in the heat treatment process (step (3) described below) is 80% by mass or more. In this case, since the residual mass of the polymer after the heat treatment may be considered to be 100% by mass at the maximum, the range of the residual mass of the polymer is preferably 60% to 100% by mass, and particularly preferably 80% to 100% by mass.

Examples of such a polymer include an acrylonitrile-based polymer (acrylonitrile-based polymerization product), a cellulose-based polymer, a phenolic polymer, and a tetrafluoroethylene-based polymer, and from the viewpoint of reducing the manufacturing cost, an acrylonitrile-based polymer (acrylonitrile-based polymerization product), a cellulose-based polymer, and a phenolic polymer are preferred. These polymers may be used singly, or may be used as a mixture including plural polymer kinds. In the case of using a mixture, when the residual mass of one or more kinds of polymers in the heat treatment process (step (3) described below) is 60% by mass or more, the residual mass of the other polymer to be mixed in the heat treatment process (step (3) described below) may be 60% by mass or less. Furthermore, in the case of using a mixture, when the one or more kinds of polymers are polymers having a softening point of 250°C or higher but lower than 400°C, the other polymer to be mixed may not be a polymer having a softening point of 250°C or higher but lower than 400°C. These polymers are not particularly limited, but a methacrylic acid-based polymer, an acrylic acid-based polymer, a vinyl-based polymer, a cellulose-based polymer, a styrene-based polymer and the like can be used. As the polymer having a residual mass in the heat treatment process (step (3) described below) of 60% by mass or more, when spinnability, the ability to join the pieces of the short carbon fiber (A) over a range of from a low temperature to a high temperature, the need to have a large residual amount in the heat treatment process, entanglement with the short carbon fiber (A), and the sheet strength are taken into consideration, it is preferable to use an acrylonitrile-based polymer.

The acrylonitrile-based polymer may be an acrylonitrile-based polymerization product obtained by polymerizing acrylonitrile alone (homopolymer), or may be an acrylonitrile-based polymerization product obtained by copolymerizing acrylonitrile with another monomer (copolymer). However, it is preferable for the acrylonitrile-based polymerization product to contain an acrylonitrile unit at a proportion of 50% by mass or more, and more preferably 80% by mass or more, relative to the total mass of the acrylonitrile-based polymerization product. When the proportion is in this range, the fiber (b) may have spinnability. Furthermore, the porous electrode substrate may have mechanical strength after the heat treatment. That is, the content of the acrylonitrile unit is preferably 50% to 100% by mass, and more preferably 80% to 100% by mass. Regarding the monomer that is copolymerized with acrylonitrile, there are no particular limitations as long as an unsaturated monomer that constitutes a general acrylic fiber. However, examples thereof include acrylic acid esters represented by methyl acrylate, ethyl acrylate, isopropyl acrylate, n-butyl acrylate, 2-ethylhexyl acrylate, 2-hydroxyethyl acrylate, and hydroxypropyl acrylate; methacrylic acid esters such as methyl methacrylate, ethyl methacrylate, isopropyl methacrylate, n-butyl methacrylate, isobutyl methacrylate, t-butyl methacrylate, n-hexyl methacrylate, cyclohexyl methacrylate, lauryl methacrylate, 2-hydroxyethyl methacrylate, hydroxypropyl methacrylate, and diethylaminoethyl methacrylate; acrylic acid, methacrylic acid, maleic acid, itaconic acid, acrylamide, N-methylol acrylamide, diacetone acrylamide, styrene, vinyltoluene, vinyl acetone, vinyl chloride, vinylidene chloride, vinylidene bromide, vinyl fluoride, and vinylidene fluoride. It is preferable that the acrylonitrile-based polymerization product has a residual mass in the heat treatment process (step (2) described below) of 60% to 100% by mass.

The weight average molecular weight of the acrylonitrile-based polymerization product is not particularly limited, but the weight average molecular weight is preferably 50,000 to 1,000,000. When the weight average molecular weight of the acrylonitrile-based polymerization product is 50,000 or more, spinnability is enhanced, and also, the yarn quality of the fiber tends to become satisfactory. Furthermore, when the weight average molecular weight of the acrylonitrile-based polymerization product is 1,000,000 or less, the polymer concentration that provides the optimal viscosity of the spinning dope is increased, and productivity tends to increase.

The method for manufacturing the fiber (b) containing a particulate substance having a melting point of 400°C or higher is not particularly limited, and for example, an oxidized fiber precursor short fiber (b1) containing a particulate substance having a melting point of 400°C or higher, which is manufactured by the method described below, or a fibrillar oxidized fiber precursor fiber (b2) containing a particulate substance having a melting point of 400°C or higher, can be used as the fiber (b) containing a particulate substance having a melting point of 400°C or higher. A fibrillar fiber such as the fibrillar carbon precursor fiber (b2) containing a polymer having a softening point of 250°C or higher but lower than 400°C and containing a particulate substance having a melting point of 400°C or higher, may include a particulate substance having a melting point of 400°C or higher and an acrylonitrile-based polymerization product. This acrylonitrile-based polymerization product may be any one or both of an acrylonitrile homopolymer and an acrylonitrile copolymer of acrylonitrile and other monomers described above.

When the fiber (b) is "an oxidized fiber precursor fiber containing a polymer having a softening point of 250°C or higher but lower than 400°C and containing a particulate substance having a melting point of 400°C or higher", the fiber (b) is such that depending on the kind of the fiber (b), the mixing ratio of the particulate substance and the polymer, and the mixing ratio of the fiber (b) and the short carbon fiber (A), the ratio (proportion) of the initial mass of the fiber (b) and the residual mass as the oxidized fiber (B) containing a particulate substance having a melting point of 400°C or higher in the porous electrode substrate that is finally obtainable, may vary. The percentage content of the fiber (b) containing a particulate substance having a melting point of 400°C or higher in the precursor sheet is preferably from 10% by mass to 90% by mass relative to the sum of the short carbon fiber (A) and the fiber (b) containing a particulate substance having a melting point of 400°C or higher. The percentage content of the fiber (b) containing a particulate substance having a melting point of 400°C or higher in the precursor sheet is more preferably from 10% by mass to 60% by mass relative to the total mass of the short carbon fiber (A) and the fiber (b) containing a particulate substance having a melting point of 400°C or higher in the precursor sheet. When the percentage content is in this range, the porous electrode substrate maintains sufficient mechanical strength, and sufficient penetration direction resistance can be obtained.

<Particulate substance having a melting point of 400°C or higher>

The particulate substance having a melting point of 400°C or higher is incorporated into the fiber containing a polymer having a softening point of 250°C or higher but lower than 400°C, in order to prevent the fiber containing a polymer having a softening point of 250°C or higher but lower than 400°C from shrinking during the heat treatment at a temperature of from 250°C to less than 400°C in the step (2) of the manufacturing method described below, and causing the generation of corrugation in the porous electrode substrate. That is, the particulate substance must be a substance that can maintain the shape during the heat treatment in the step (2) that will be described below. Therefore, it is necessary for the melting point of the particulate substance to be higher than the softening point of the polymer described above. Specifically, the melting point needs to be 400°C or higher, and is preferably 500°C or higher, which is 100°C higher than the softening point. A higher melting point of the particulate substance is more desirable, but the melting point is usually 4000°C or lower. That is, as an example of the particulate substance, particles having a melting point of 400°C to 4000°C, preferably 500°C to 4000°C, and more preferably 3000°C to 4000°C, can be used. For example, the carbon black used in the present exemplary embodiment has a melting point of about 3550°C.

Examples of the particulate substance having a melting point of 400° or higher include carbon powder (C1), silica, and titania, and from the viewpoint of manifesting electrical conductivity of the porous electrode substrate, carbon powder (C1) is preferred.

The carbon powder (C1) is a powder containing carbon as a main constituent material. The carbon powder (C1) is not particularly limited, but carbon black, graphite powder, carbon fiber-milled fiber, activated carbon, nanocarbon, and the like can be used. From the viewpoint of manifesting electrical conductivity and from the viewpoint of cost, it is preferable to use carbon black, or a mixture of carbon black and a graphite powder.

It is more preferable that the carbon powder (C1) contains at least carbon black. Carbon black generally exists as a structure in which primary particles having an average particle size of several ten nanometers are fused together to form structures, and the structures are bonded by van der Waals force (agglomerates). Carbon black has a significantly large number of particles per unit mass compared with graphite powder, and at a certain critical concentration or higher, agglomerates are arranged in a three-dimensional network form, and form macroscopic electrical conduction paths. For that reason, manifestation of electrical conductivity by the porous electrode substrate is improved when carbon black is used as the carbon powder (C1). The proportion of carbon black included in the carbon powder is more preferably in the range of 70% to 100% by mass, and particularly preferably in the range of 80% to 90% by mass, relative to the total amount of the carbon powder. When the proportion of carbon black is adjusted to 70% by mass or more, formation of the electrical conduction paths in the form of three-dimensional network is facilitated.

On the other hand, it is also preferable to add graphite powder as the carbon powder. Since graphite powder has a highly crystalline graphite structure, graphite powder exhibits high electrical conductivity. The average particle size of the primary particles of graphite powder is generally from several micrometers to several hundred micrometers. The proportion of graphite powder included in the carbon powder is preferably in the range of 10% to 20% by mass relative to the total mass of the carbon powder.

Regarding carbon black, furnace black, channel black, acetylene black, lamp black, thermal black, Ketjen black and the like can be used; however, acetylene black or Ketjen black having excellent electrical conduction properties and dispersibility is more preferred, and from the viewpoint of electrical conductivity, Ketjen black is particularly preferred. Regarding graphite powder, pyrolytic graphite, spherical graphite, scale-like graphite, bulky graphite, soil-like graphite, artificial graphite, expanded graphite, and the like can be used; however, pyrolytic graphite or spherical graphite having excellent electrical conductivity is preferred.

The particulate substance having a melting point of 400°C or higher in the oxidized fiber (B) containing a particulate substance having a melting point of 400°C or higher, and the fiber (b) containing a particulate substance having a melting point of 400°C or higher may have the primary particles respectively uniformly dispersed, or may have the primary particles aggregated. Furthermore, primary particles of this particulate substance or aggregates thereof may be uniformly dispersed, or may be localized, in the oxidized fiber (B) and the fiber (b). Regarding a particulate substance localized in the oxidized fiber (B) and the fiber (b), a particulate substance that forms a core-shell structure localized in the fiber core portion (for example, localized near the central axis in a cross-section in the diameter direction of an approximately cylindrical-shaped fiber), a particulate substance that forms, on the contrary, a core-shell structure localized in the fiber surface layer portion (localized near the circumference in a cross-section of a cylindrical-shaped fiber), and the like can be used. From the viewpoint of enhancing electrical conductivity or mechanical strength of the porous electrode substrate, it is preferable to form a core-shell structure in which a carbon powder (C1) is localized at the fiber surface layer portion.

The content of the particulate substance having a melting point of 400°C or higher in this fiber (b) containing a particulate substance having a melting point of 400°C or higher is preferably from 10% by mass to 90% by mass. When the content is in this range, sufficient fiber strength of the fiber (b) is obtained. Furthermore, it is preferable that the upper limit of the average content of the particulate substance having a melting point of 400°C or higher is higher in the extent of spinning can be achieved; however, from the viewpoint of spinning stability in the manufacturing stage of the fiber, the average content is particularly preferably 70% by mass or less. When the carbon powder (C1) is used as the particulate substance having a melting point of 400°C or higher, from the viewpoint of manifesting sufficient fiber strength and electrical conductivity, the average content of the carbon powder (C1) in this fiber (b) is preferably from 10% by mass to 90% by mass relative to the total mass of the fiber (b) containing a polymer and the like.

In a case in which the particulate substance having a melting point of 400°C or higher in the fiber (b) is localized, the content of the particulate substance having a melting point of 400°C or higher in the localized area is preferably from 60% by mass to 90% by mass relative to the total mass of the fiber (b), from the viewpoint of electrical conductivity. Furthermore, the content of the particulate substance is particularly preferably from 70% by mass to 90% by mass relative to the total mass of the fiber (b).

<Oxidized fiber precursor short fiber (b1) containing polymer having softening point of 250°C or higher but lower than 400°C and particulate substance having melting point of 400°C or higher>

The oxidized fiber precursor short fiber (b1) containing a particulate substance having a melting point of 400°C or higher can be manufactured using the acrylonitrile-based polymer (acrylonitrile-based polymerization product), cellulose-based polymer and phenolic polymer described above, as raw materials. For example, the oxidized fiber precursor short fiber (b) can be manufactured using a general spinning method of using a particulate substance having a melting point of 400°C or higher and a polymer that can be used as a raw material of an oxidized fiber precursor fiber. For example, when an acrylonitrile-based polymerization product is used as the polymer, the short fiber can be manufactured by spinning a spinning dope in which the acrylonitrile-based polymerization product and a particulate substance having a melting point of 400°C or higher are dissolved in a solvent, or dispersed in a dispersing medium, by a known spinning method such as a dry method or a wet method to produce long fibers, and cutting these long fibers.

The oxidized fiber precursor short fiber (b1) may be a product obtained by cutting a long fiber-like oxidized fiber precursor fiber containing a particulate substance having a melting point of 400°C or higher, to an appropriate length.

The average fiber length of the oxidized fiber precursor short fiber (b1) containing a particulate substance having a melting point of 400°C or higher is preferably from 2 mm to 20 mm, from the viewpoint of dispersibility. The average fiber length can be measured by measuring the fiber length of plural fibers (for example, 20 to 100 strands, 50 strands in the present exemplary embodiment) by optical microscopy and electron microscopy, and determining the average of the fiber lengths. The cross-sectional shape of the oxidized fiber precursor short fiber (b1) containing a particulate substance having a melting point of 400°C or higher is not particularly limited, and a short fiber having high circularity or a short fiber having a variant cross-sectional shape may also be used. In view of the manufacturing cost, a short fiber having high circularity is preferred. Furthermore, the average diameter of the oxidized fiber precursor short fiber (b1) containing a particulate substance having a melting point of 400°C or higher is preferably 20 $\mu$m or less. When the average diameter is in this range, the porous electrode substrate can maintain sufficient mechanical strength. Meanwhile, the average fiber diameter (diameter) of the fiber can be measured by measuring the fiber length of plural fibers (50 strands in the present exemplary embodiment) by optical microscopy and electron microscopy as described above, and determining the average of the fiber lengths.

Meanwhile, an example of the oxidized fiber precursor fiber (b1) may be an oxidized fiber precursor fiber (b) containing the carbon powder (C I) described above.

<Fibrillar oxidized fiber precursor fiber (b2) containing particulate substance having melting point of 400°C or higher and containing polymer having softening point of 250°C or higher but lower than 400°C>

Regarding the fibrillar oxidized fiber precursor fiber (b2) containing a polymer having a softening point of 250°C or higher but lower than 400°C and containing a particulate substance having a melting point of 400°C or higher, for example, the following fibers can be used.

(1) An oxidized fiber precursor fiber (b2-1) containing a particulate substance having a melting point of 400°C or higher, containing a polymer having a softening point of 250°C or higher but lower than 400°C, and having a branched structure with a large number of fibrils: in the following, may be referred to as "oxidized fiber precursor fiber (b2-1) containing a polymer having a softening point of 250°C or higher but lower than 400°C, having a branched structure with a large number of fibrils, and containing a particulate substance having a melting point of 400°C or higher", or "oxidized fiber precursor fiber (b2-1)".

Specifically, the oxidized fiber precursor fiber (b2-1) preferably has a structure in which a large number (for example, 10 to 100 fibrils for one core) of fibrils each having a diameter of from 0.05 $\mu$m to 5 $\mu$m (for example, 0.1 to 3 $\mu$m) are branched from a fibrous stem (core) having a diameter (average fiber diameter measured by the method described above) of from 3 $\mu$m to 100 $\mu$m.

(II) An oxidized fiber precursor fiber (b2-2) containing a particulate substance having a melting point of 400°C or higher, containing a polymer having a softening point of 250°C or higher but lower than 400°C, and having been fibrillated by beating: in the following, may be referred to as "oxidized fiber precursor fiber (b2-2) containing a polymer having a softening point of 250°C or higher but lower than 400°C, having been fibrillated by beating, and containing a particulate substance having a melting point of 400°C or higher", or "oxidized fiber precursor fiber (b2-2)".

When such a fibrillar oxidized fiber precursor fiber (b2) containing a particulate substance having a melting point of 400°C or higher is used, the short carbon fiber (A) and the fibrillar oxidized fiber precursor fiber (b2) containing a particulate substance having a melting point of 400°C or higher are thoroughly entangled in the precursor sheet, and a precursor sheet having excellent handleability and mechanical strength can be easily obtained.

The freeness (measured by the evaluation of freeness described below) of the fibrillar oxidized fiber precursor fiber (b2) containing a particulate substance having a melting point of 400°C or higher is not particularly limited. Generally, when a fibrillar fiber having low freeness is used, the mechanical strength of the precursor sheet is enhanced, and gas permeability of the porous electrode substrate tends to decreased.

Regarding the fibrillar oxidized fiber precursor fiber (b2) containing a particulate substance having a melting point of 400°C or higher, a precursor fiber of only a single kind in terms of the constituent material or the physical characteristics described above as the oxidized fiber precursor fiber (b2-1) or (b2-2) may be used. Also, plural precursor fibers having different kinds of these constituent materials or physical characteristics may also be used in combination as the oxidized fiber precursor fiber (b2-1) or (b2-2). For example, even for fibers manufactured using the same material as the constituent materials of the particulate substance and the polymer, fibers having different mass ratios of the particulate substance and the polymer, fibers having different values of freeness evaluation (measurement made by an evaluation of freeness as will be described below), or fibers having different fiber diameters may be used in combination of plural kinds.

<Oxidized fiber precursor fiber (b2-1) containing particulate substance having melting point of 400°C or higher, containing polymer having softening point of 250°C or higher but lower than 400°C, and having structure in which large number of fibrils each having diameter of several micrometers ($\mu$m) or less (for example, 0.1 to 3 $\mu$m) are branched from fibrous stem having diameter of 100 $\mu$m or less>

The method for manufacturing the oxidized fiber precursor fiber (b2-1) containing a polymer having a softening point of 250°C or higher but lower than 400°C, having a structure in which a large number of fibrils each having a diameter of several micrometers ($\mu$m) or less (for example, 0.1 to 3 $\mu$m) are branched from a fibrous stem (core) having a diameter of 100 $\mu$m or less, and containing a particulate substance having a melting point of 400°C or higher, is also not particularly limited; however, it is preferable to manufacture the precursor fiber using a jet solidification method which allows easy control of the freeness that will be described below. Manufacturing of the oxidized fiber precursor fiber (b2-1) according to a jet solidification method can be carried out, for example, by the following method using the apparatus illustrated in Fig. 1. A spinning dope in which the raw materials of the oxidized fiber precursor fiber (b2-1) (for example, acrylonitrile-based polymerization product and carbon black) are dissolved in a solvent or dispersed in a dispersing medium, is discharged into a mixing cell through a spinneret, and at the same time, steam is ejected into the mixing cell at an angle of 0° or more but less than 90° with respect to the direction of the discharge line of the spinning dope. Thus, the fibrillar carbon precursor fiber raw materials including the particulate substance having a melting point of 400°C or higher are solidified in the mixing cell under a shear flow rate. The solidification product thus formed is discharged into a solidifying liquid from the mixing cell together with the solvent or dispersing medium and steam, and thereby a fibrillar carbon fiber precursor fiber containing a carbon powder is obtained. For the solidifying liquid, water, or a mixed liquid of water and the solvent or dispersing medium can be used. At this time, the particulate substance having a melting point of 400°C or higher may be dispersed almost uniformly, or may be localized, in the acrylonitrile-based polymerization product.

The oxidized fiber precursor fiber (b2-1) obtained in this manner has a fibril portion which is a collection of fibers having a fine fiber diameter, and a step (step portion, core portion) having a large fiber diameter, which has been solidified without being excessively exposed to steam. The fibril portion of the oxidized fiber precursor fiber (b2-1) improves the entanglement between the oxidized fiber precursor fiber (b2-1) and the short carbon fiber (A) or the entanglement between the fibril portions of the oxidized fiber precursor fiber (b2-1), and the stem portion of the oxidized fiber precursor fiber (b2-1) can exhibit strength as a binder. In order to make the entanglement with the short carbon fiber mixed therein, the fiber diameter of the fibril portion is preferably 2 $\mu$m or less. For example, the fiber diameter of the fibril portion is preferably 0.05 to 2 $\mu$m.

The stem (core portion) preferably has a diameter (a value measured in the same manner as in the case of the average fiber diameter of the fiber) of 100 $\mu$m or less. When the diameter is adjusted to 100 $\mu$m or less, uneven distribution of the oxidized fiber precursor fiber (b2-1) (there occur areas where the fibers are hardened) can be more reliably suppressed, and homogenization of the porous electrode substrate can be achieved. Furthermore, the short carbon fiber (A) can be easily joined (bound) by a relatively small amount of the oxidized fiber precursor fiber (b2-1). Also, from the viewpoint of manifesting strength, the diameter of the core portion is preferably 10 $\mu$m or more.

The oxidized fiber precursor fiber (b2-1) is preferably such that plural fibril portions exist for one core portion, and it is believed that it is more preferable as there are more fibril portions for one core portion. When there are many fibril portions available for one core portion (as a reference, 10 to 100 fibril portions per core portion), the function of entangling the oxidized fiber precursor fiber (b2-1) with the short carbon fiber is enhanced.

For one strand of the oxidized fiber precursor fiber (b2-1), it is preferable that the thickness of the core portion is constant, or varies in a stepless manner. Thereby, the portion of level difference being weakened due to a stepwise change in the thickness of the core portion can be easily prevented, and a decrease in strength can be easily prevented. Meanwhile, when the oxidized fiber precursor fiber (b2-1) is manufactured by the method described above, it is difficult in many cases to maintain the thickness of the core portion constant, because steam is randomly scattered. In this case, the thickness of the core portion may change. However, a stepwise change in the thickness of the core portion tends to appear when the ejected steam is cooled and turns into liquid droplets. Therefore, the thickness of the core portion changing in a stepwise manner can be easily prevented by a method of increasing the ejection pressure of steam and increasing the temperature, or the like.

<Oxidized fiber precursor fiber (b2-2) containing particulate substance having melting point of 400°C or higher, containing polymer having softening point of 250°C or higher but lower than 400°C, and having been fibrillated by beating>

The method for manufacturing an oxidized fiber precursor fiber (b2-2) containing a polymer having a softening point of 250°C or higher but lower than 400°C, having been fibrillated by beating, and containing a particulate substance having a melting point of 400°C or higher, is also not particularly limited. However, as will be described below, use is made of a product obtained by cutting a long fiber-like, easily splittable, sea-island composite fiber that can be easily fibrillated, to the fiber length that will be described below, and fibrillating the resultant by beating with a refiner, a pulper or the like. The long fiber-like, easily splittable, sea-island composite fiber can be manufactured using two or more kinds of polymers having different constituent compounds or different physical properties such as fiber length and fiber diameter (heterogeneous polymers), which dissolve in a common solvent but are non-compatible.

It is preferable to use the polymer described above as one of the polymers used in the easily splittable, sea-island composite fiber, and for example, when an acrylonitrile-based polymerization product is used, a polymer which dissolves in a solvent that can be commonly used with the acrylonitrile-based polymerization product, and which enables a spinning dope having the two polymers dissolved therein to exist stably, is preferred as the other polymer. That is, the other polymer is desirably such that when the polymer is dissolved in a solvent that can be commonly used with the acrylonitrile-based polymerization product, the polymer is non-compatible with the acrylonitrile-based polymerization product, and has miscibility to the extent that a sea-island structure can be formed at the time of spinning. Thereby, when a spinning dope is formed, heterogeneity of the fibers occurring in a case in which the degree of non-compatibility of the two kinds of polymers is large, can be easily prevented, and also, yarn breakage at the time of spinning can be easily prevented, so that fiber shaping can be easily achieved. Furthermore, it is preferable that the other polymer is sparingly soluble in water, and thereby, in the case of conducting wet spinning, dissolution of the other polymer in water in the solidification tank and the washing tank, and subsequent occurrence of dropping out can be easily prevented.

Examples of the other polymer that satisfy these requirements include polyvinyl chloride, polyvinylidene chloride, polyvinylidene fluoride, polyvinylpyrrolidone, cellulose acetate, acrylic resins, methacrylic resins, and phenolic resins. Among them, from the viewpoint of the balance of the requirements described above, cellulose acetate, acrylic resins and methacrylic resins are preferred. The other polymer may be a single kind of polymer, or two or more kinds of polymers. In the case of mixing one kind of polymer with another polymer, the mixing ratio of the one kind of polymer is preferably 40% to 90% by mass, and more preferably 50% to 80% by mass, relative to the total mass of the two kinds.

The easily splittable, sea-island composite fiber used in the oxidized fiber precursor fiber (b2-2) can be manufactured by a conventional wet spinning method. For example, in the case of using an acrylonitrile-based polymerization product, first, a spinning dope is prepared by dissolving an acrylonitrile-based polymerization product and another polymer in a solvent. Alternatively, a spinning dope obtainable by dissolving an acrylonitrile-based polymerization product in a solvent, and a spinning dope obtainable by dissolving another polymer in a solvent may be mixed with a static mixer or the like, and the mixture may be used as a spinning dope.

Regarding the solvent, dimethylamide, dimethylformamide, dimethyl sulfoxide and the like can be used. Such a spinning dope is supplied to a spinning machine and is spun through a nozzle, and the spun fiber is subjected to hydrothermal stretching, washing, drying and dry hot stretching. Thus, an easily splittable, sea-island composite fiber can be obtained.

At this time, the particulate substance having a melting point of 400°C or higher may be dispersed only in the acrylonitrile-based polymerization product or in the other polymer, or may be dispersed in both of the polymers. In regard to the dispersed state, the particulate substance may be almost uniformly dispersed, or may be localized in any one of the polymers or in both of the polymers.

The cross-sectional shape in the fiber length direction of the easily splittable, sea-island composite fiber is not particularly limited. The fineness of the easily splittable, sea-island composite fiber is preferably from 1 dtex to 10 dtex.

When the fineness has this value, dispersibility of the easily splittable, sea-island composite fiber is increased, and fracture caused by shrinkage at the time of carbonization is suppressed. The average fiber length measured by measuring fiber lengths of 50 strands of the easily splittable, sea-island composite fiber using optical microscopy and electron microscopy, and determining the average value thereof, is preferably from 1 mm to 20 mm from the viewpoint of dispersibility after beating.

For the easily splittable, sea-island composite fiber, it is preferable to use a composite fiber obtained by applying an operation of dividing the fiber by applying external mechanical force, that is, beating. The easily splittable, sea-island composite fiber is beaten by the detachment of the phase separation interface caused by beating, and at least a portion thereof is split and fibrillated. The beating method is not particularly limited, but for example, fibrillation can be carried out using a refiner, a pulper, a beater, or jetting of a pressurized water stream (water jet punching).

When the easily splittable, sea-island composite fiber is beaten by detachment of the phase separation interface caused by external mechanical force, the fibrillated state changes depending on the beating method and the beating time. As a method of evaluating the degree of fibrillation, an evaluation of freeness (ISO-5267-2 (Canadian Standard Freeness Method)) can be used. There are no particularly limited on the freeness of the oxidized fiber precursor fiber (b2-2), but in this manufacturing method, for example, the freeness has a value of about 10 to 650 ml. In the present exemplary embodiment, for example, a refiner is used as the beating method, and the beating time used is 10 minutes. There is an advantage that thereby the entanglement between the short carbon fiber (A) and the parts of the fibrillated oxidized fiber precursor fiber (b2-2) is made satisfactory.

<Carbon powder (C2)>

The carbon powder (C1) is a powder containing carbon as a main constituent material. The carbon powder (C2) is not particularly limited, but carbon black, graphite powder, carbon fiber-milled fiber, activated carbon, nanocarbon, and the like can be used. From the viewpoint of manifesting electrical conductivity and from the viewpoint of cost, it is preferable to use carbon black, or a mixture of carbon black and graphite powder.

It is preferable that the carbon powder (C2) contains at least carbon black. Carbon black generally exists as a structure in which primary particles having an average particle size of several ten nanometers are mutually fused to form structures, and the structures are further bonded by van der Waals force (agglomerates). Carbon black has a significantly large number of particles per unit mass compared with graphite powder, and at a certain critical concentration or higher, agglomerates are arranged in a three-dimensional network form, and form macroscopic electrical conduction paths. For that reason, manifestation of electrical conductivity by the porous electrode substrate is improved when carbon black is used as the carbon powder (C1). The proportion of carbon black included in the carbon powder is more preferably in the range of 70% to 90% by mass, and particularly preferably in the range of 80% to 90% by mass, relative to the total mass of the carbon powder. When the proportion of carbon black is adjusted to 70% by mass or more, formation of the electrical conduction paths in the form of three-dimensional network is facilitated.

On the other hand, it is preferable that the carbon powder includes substances other than carbon black. It is because a dispersion liquid containing carbon black only as the carbon powder is likely to have high viscosity. As the carbon powder other than carbon black, for example, graphite powder is preferred. When graphite powder is added, the viscosity of the dispersion liquid can be decreased while the concentration of the carbon powder is maintained.

Since graphite powder has a highly crystalline graphite structure, graphite powder exhibits high electrical conductivity. The average particle size of the primary particles of graphite powder is generally several micrometers to several hundred micrometers. The proportion of the graphite powder included in the carbon powder is preferably in the range of 10% to 20% by mass relative to the total mass of the carbon powder.

Examples of carbon black that can be used include furnace black, channel black, acetylene black, lamp black, thermal black, and Ketjen black; however, acetylene black or Ketjen black having excellent electrical conduction properties are more preferred, and from the viewpoint of electrical conductivity, Ketjen black is particularly preferred. Examples of graphite powder that can be used include pyrolytic graphite, spherical graphite, scale-like graphite, bulky graphite, soil-like graphite, artificial graphite, and expanded graphite; however, pyrolytic graphite or spherical graphite having excellent electrical conductivity is preferred.

The particulate substance having a melting point of 400°C or higher and the carbon powder (C2) may be identical, or it is also acceptable to use different carbon materials.

Regarding the content of the carbon powder (C2) in the porous electrode substrate, when the sum of the short carbon fiber (A) and the oxidized fiber (B) containing a particulate substance having a melting point 400°C or higher is designated as 100 parts by mass, the content is preferably 10 to 100 parts by mass, and more preferably 10 to 50 parts by mass. When this range is selected, satisfactory manifestation of electrical conductivity of the porous electrode substrate is achieved, and strength of the porous electrode substrate can also be secured.

\<Fluorine-based resin\>

A fluorine-based resin (fluorine resin, fluorinated resin) refers to a resin that is obtained by polymerizing a compound containing fluorine. The fluorine-based resin is not particularly limited, but homopolymers or copolymers of fluorine-based monomers such as tetrafluoroethylene (TFE), hexafluoropropylene (HFP), vinylidene fluoride (VDF), chlorotrifluoroethylene (CTFE), vinyl fluoride, perfluoroalkyl vinyl ether, perfluoro(allyl vinyl ether), perfluoro(butenyl vinyl ether) (PBVE), and perfluoro(2,2-dimethyl-1,3-dioxol) (PDD) can be used. Furthermore, an ethylene-tetrafluoroethylene copolymer (ETFE), an ethylene-chlorotrifluoroethylene copolymer (ECTFE) and the like, which are copolymers of the fluorine-based monomers and olefins represented by ethylene, can also be used.

Regarding the form of such a fluorine-based resin, a resin in a state of being dissolved in a solvent, or a resin in the state of being dispersed in a particulate form in a dispersing medium such as water or an alcohol is preferred. When resins in these states are used, manifestation of electrical conductivity, and the binder performance when the short carbon fiber (A) and the oxidized fiber (B) containing the carbon powder (C1) are joined can be manifested. From the viewpoint that commercially available products can be easily distributed in the form of solution, dispersion liquid, or particles, polytetrafluoroethylene (PTFE), a tetrafluoroethylene-hexafluoropropylene copolymer (FEP), tetrafluoroethylene-perfluoroalkyl vinyl ether (PFA), polyvinylidene fluoride (PVDF), and the like may be used, and it is preferable to use these from the viewpoints of handleability and manufacturing cost. Meanwhile, these fluorine-based resins are water-repellent.

Regarding the content of the fluorine-based resin in the porous electrode substrate, when the sum of the short carbon fiber (A) and the oxidized fiber (B) containing a particulate substance having a melting point of 400°C or higher is designated as 100 parts by mass, the content is preferably 10 to 100 parts by mass, and more preferably 10 to 40 parts by mass. When this range is selected, manifestation of the electrical conductivity of the porous electrode substrate becomes satisfactory, and strength of the porous electrode substrate can also be secured.

This fluorine-based resin is preferably such that the residual mass in the heat treatment process (step (3) that will be described below) is 80% by mass or more. When the residual mass is in this range, sufficient mechanical strength of the porous electrode substrate is maintained, and less environmental load is imposed. The residual mass is more preferably 95% or more.

\<Carbon powder (C2) and fluorine-based resin\>

The mass ratio of the carbon powder (C2) after the heat treatment process (step (3) that will be described below) and the fluorine-based resin is preferably 2:8 to 8:2, and more preferably 4:6 to 7:3, from the viewpoints of manifesting electrical conductivity and manifesting the binder performance.

Furthermore, in regard to the carbon powder and the fluorine-based resin, when they are used in the step (2) that will be described below, it is preferable to use a slurry-like dispersion liquid obtained by mixing the carbon powder and the fluorine-based resin. When these are in a slurry form, impregnability is increased when a precursor sheet formed to include the short carbon fiber (A) and the fiber (b) containing a particulate substance having a melting point of 400°C or higher is impregnated with the slurry. Regarding the dispersing solvent, it is preferable to use water, an alcohol, or a mixture thereof from the viewpoints of handleability and manufacturing cost. The concentration of the carbon powder (C2) in the dispersion liquid is preferably 4% by mass or more relative to the total mass of the dispersion liquid. When the concentration is in this range, electrical conduction paths formed from the carbon powder (C2) can be effectively formed in the porous electrode substrate. Furthermore, the concentration of the carbon powder (C2) is preferably 8% by mass or less. When the concentration is in this range, the dispersion liquid is less viscosity and has high impregnability, and the operation of impregnation is facilitated. The concentration of the carbon powder (C2) is more preferably 6% to 8% by mass relative to the total mass of the dispersion liquid. When the concentration is in this range, a balance can be suitably achieved between the formation of electrical conduction paths in the porous electrode substrate, and operability of impregnation can be achieved. The concentration of the fluorine-based resin in the dispersion liquid is preferably 2% by mass or more relative to the total mass of the dispersion liquid in view of imparting water avoidance (water repellency) to the porous electrode substrate, and the concentration is preferably 6% by mass or less, and more preferably 3% to 6% by mass, relative to the total mass of the dispersion liquid so as not to inhibit electrical conductivity.

In the case of using water as the dispersing solvent, a dispersant such as a surfactant can be used in order to disperse the carbon powder (C2) or the fluorine-based resin. There are no particular limitations on the dispersant, but polyethers such as polyoxyethylene alkyl phenyl ether, or aromatic sulfonic acid salts such as naphthalenesulfonic acid salts can be used.

The carbon powder (C2) in the carbon powder (C2) and the fluorine-based resin may be such that primary particles are respectively uniformly dispersed, or primary particles are aggregated. However, from the viewpoint of electrical conductivity, it is preferable that the primary particles form aggregates. Furthermore, it is preferable that the aggregates are localized in the carbon powder (C2) and the fluorine-based resin.

Furthermore, for the purpose of controlling the structure of the structure formed by the carbon powder (C2) and the fluorine-based resin, materials that are lost in the heat treatment process (step (3) that will be described below) may be used in mixture. As these materials, nylon-based fibers, olefin-based fibers, methacrylic acid-based resin particles and the like can be used.

«Method for manufacturing porous electrode substrate»

It is desirable that the method for manufacturing a porous electrode substrate of the present exemplary embodiment includes at least the following step (1), step (2) and step (3).

Step (1): Step (1) of manufacturing a precursor sheet in which a short carbon fiber (A) and a fiber (b) containing a polymer having a softening point of 250°C or higher but lower than 400°C and containing a particulate substance having a melting point of 400°C or higher are dispersed in the planar direction of the sheet.
Step (2): Step (2) of impregnating the precursor sheet with a carbon powder (C2) and a fluorine-based resin.
Step (3): Step (3) of heat treating the precursor sheet obtained after step (2), at a temperature of 250°C or higher but lower than 400°C in the presence of oxygen.

According to the present exemplary embodiment, a step (4) of subjecting the precursor sheet to an entangling treatment and forming a three-dimensional entangled structure may be included between step (1) and step (2).
Furthermore, a step (5) of subjecting the precursor sheet to hot pressure molding at a temperature of lower than 200°C may be included before step (2), and when the process includes step (4) before step (2), the step (5) may be carried out between step (4) and step (2).
Also, the process may have a step (6) of subjecting the precursor sheet to a drying treatment at a temperature of 70°C or higher but lower than 150°C, between step (2) and step (3).
Meanwhile, from the viewpoint of the manufacturing cost, it is preferable that the manufacturing method of the present exemplary embodiment does not include a carbonization process at 1000°C or higher.

<Outline of main processes>

The method for manufacturing a porous electrode substrate is to obtain a porous electrode substrate by impregnating a precursor sheet in which a short carbon fiber (A) and a fiber (b) are dispersed in a planar direction, with a carbon powder (C2) and a fluorine-based resin, and heat treating the precursor sheet at 250°C to 400°C in the presence of oxygen (more specifically, in air). That is, the fiber (b) dispersed in the precursor sheet is oxidation treated by a heat treatment, and an oxidized fiber (B) containing a particulate substance having a melting point of 400°C or higher is obtained. Meanwhile, in the precursor sheet, the short carbon fiber (A) and the fiber (b) can be dispersed in a planar direction, and can be further dispersed three-dimensionally by an entangling treatment or the like. Furthermore, before the heat treatment, the precursor sheet may also be subjected to hot pressure molding, if necessary.
The pieces of the short carbon fiber (A) are not joined even if heat-treated; however, as will be described below, when the precursor sheet is heat treated at a temperature of 250°C or higher but lower than 400°C in the presence of oxygen (step (3)) as will be described below, a portion of the fiber (b) in the precursor sheet melts and accomplishes the role of an adhesive component. For example, when the fiber (b) is "an oxidized fiber precursor fiber containing a polymer having a softening point of 250°C or higher but lower than 400°C and containing a particulate substance having a melting point of 400°C or higher", a partial structure in which the pieces of the short carbon fiber (A) are joined by means of an oxidized fiber (B) containing a particulate substance having a melting point of 400°C or higher.
Hereinafter, to schematically explain the effects of the various processes, in step (3), when the fluorine-based resin in the precursor sheet is heat treated at a temperature of 250°C or higher but lower than 400°C, the fluorine-based resin acts as a binder, and a partial structure in which the pieces of the short carbon fiber (A) are joined by the fluorine-based resin containing a carbon powder (C2).
Meanwhile, the "short carbon fiber (A)" and the "oxidized fiber (B) containing a particulate substance having a melting point of 400°C or higher" are joined by melting of the fiber (b) itself in the step (3); however, usually, the short carbon fiber (A) and the oxidized fiber (B) are also joined by the fluorine-based resin containing a carbon powder (C2). Even for the portions in which the "short carbon fiber (A)" and the "oxidized fiber (B) containing a particulate substance having a melting point of 400°C or higher" are joined, when the fibers are joined by the "fluorine-based resin containing a carbon powder (C2)", resistance of the portions is decreased, and strength is also increased.
Furthermore, in a case in which the "fluorine-based resin containing a carbon powder (C2)" is mediated between the "short carbon fiber (A)" and the "fiber (b)" in step (2), a partial structure in which the "short carbon fiber (A)" and the "oxidized fiber (B) containing a particulate substance having a melting point of 400°C or higher" are joined by the "fluorine-based resin containing a carbon powder (C2)" can also be formed.

In a case in which the strands of the "oxidized fiber containing a particulate substance having a melting point of 400°C or higher" are joined in the precursor sheet, a partial structure in which the strands of the "oxidized fiber (B) containing a particulate substance having a melting point of 400°C or higher" are joined in the step (3), is formed. The relevant joined portions may be further joined by the "fluorine-based resin containing a carbon powder (C2)".

Furthermore, when the "fluorine-based resin containing a carbon powder (C2)" is mediated between the strands of the "oxidized fiber (B) containing a particulate substance having a melting point of 400°C or higher" in step (2), a partial structure in which the strands of the "oxidized fiber (B) containing a particulate substance having a melting point of 400°C or higher" are joined by the "fluorine-based resin containing a carbon powder (C2)" can also be formed.

Through these processes, the porous electrode substrate of the present exemplary embodiment may have structures such as the above-described items (I) to (III). In addition, the porous electrode substrate of the present exemplary embodiment can also adopt structures other than the above (I) to (III), as previously described.

Hereinafter, the various processes will be described in more detail.

<Step (1): Step (1) of manufacturing precursor sheet in which short carbon fiber (A) and fiber (b) containing polymer having softening point of 250°C or higher but lower than 400°C and particulate substance having melting point of 400°C or higher are dispersed in planar direction>

First, a process of manufacturing a precursor sheet in which the short carbon fiber (A) and the fiber (b) are dispersed in a planar direction, is carried out. Dispersing in a planar direction involves approximately uniformly arranging in a certain plane (flat plane), and thereby the short carbon fiber (A) and the fiber (b) form a sheet form. Regarding the method for manufacturing a precursor sheet, papermaking methods such as a wet method of performing papermaking by dispersing the "short carbon fiber (A)" and the "fiber (b) containing a polymer having a softening point of 250°C or higher but lower than 400°C and containing a particulate substance having a melting point of 400°C or higher" in a liquid medium that will be described below with respect to a flat plane, and then drying the dispersion; and a dry method of dispersing the short carbon fiber (A), the "short carbon fiber (A)", and the "fiber (b) containing a polymer having a softening point of 250°C or higher but lower than 400°C and a particulate substance having a melting point of 400°C or higher" in air with respect to a flat plane, and causing the fibers to fall and pile up, can be applied. However, from the viewpoint of having high uniformity of the sheet, it is preferable to use a wet method.

In the present exemplary embodiment, "a fiber (b) containing a polymer having a softening point of 250°C or higher but lower than 400°C and containing a particulate substance having a melting point of 400°C or higher" is used. When this fiber is used, the fiber helps opening of the short carbon fiber (A) (from a state of plural fibers are gathered and converged, fibers are separated into a state of single fibers), and also prevents reconvergence of the opened single fibers. For the fiber (b), it is preferable to use a fibrillar oxidized fiber precursor fiber (b2) containing a particulate substance having a melting point of 400°C or higher, and to use this for wet papermaking. Based on this configuration, the short carbon fiber (A) and the fiber (b) containing a particulate substance having a melting point of 400°C or higher are entangled, and thereby the sheet strength is increased. Furthermore, the precursor sheet can be manufactured substantially without using a sheet-making binder such as polyvinyl alcohol or polyvinyl acetate, which melts or dissolves at the time of manufacturing of the precursor sheet and binds the pieces of the short carbon fiber (A). Furthermore, it is also preferable to use an entangling treatment process (4) that will be described below. When this process is undertaken, the sheet strength is increased by entangling the short carbon fiber (A) and the fiber (b) containing a particulate substance having a melting point of 400°C or higher, and thus the precursor sheet can be manufactured substantially without using a sheet-making binder such as polyvinyl alcohol that melts or dissolves at the time of manufacturing the precursor sheet and binds the pieces of the short carbon fiber (A).

Furthermore, wet papermaking can also be achieved using a sheet-making binder as necessary. The sheet-making binder plays a role as a sizing agent that fastens various components in the precursor sheet containing the short carbon fiber (A) and the fiber (b) containing a particulate substance having a melting point of 400°C or higher. Regarding the sheet-making binder, polyvinyl alcohol (PVA), polyvinyl acetate or the like can be used. Particularly, polyvinyl alcohol is preferred from the viewpoint of having excellent binding force in the papermaking process and causing less fall-out of the short carbon fiber (A). In the present exemplary embodiment, the binder can be made into a fiber shape and used; however, in this explanation, such a binder as described above is not used from the viewpoint of giving priority to the reduction of manufacturing cost and the manifestation of electrical conductivity.

Examples of the liquid medium for dispersing the short carbon fiber (A) and the fiber (b) containing a particulate substance having a melting point of 400°C or higher include media in which the fiber (b) containing a particulate substance having a melting point of 400°C or higher does not dissolve, such as water or an alcohol. Among these, from the viewpoint of productivity, it is preferable to use water.

Regarding the method of mixing the short carbon fiber (A) and the fiber (b) containing a particulate substance having a melting point of 400°C or higher, a method of stirring and dispersing the fibers in water, and a method of directly mixing these fibers may be used. However, from the viewpoint of uniformly dispersing the fibers, a method of diffusing and dispersing the fibers in water is preferred. When a precursor sheet is manufactured by mixing the short carbon fiber (A) and the fiber (b) containing a particulate substance having a melting point of 400°C or higher and performing papermaking, strength of the precursor sheet can be enhanced. Also, the short carbon fiber (A) detaching from the precursor sheet during the manufacturing thereof, and the orientation of the short carbon fiber (A) changing thereby can be prevented.

A sheet manufactured in a wet manner can be manufactured into a precursor sheet by drying the sheet using methods such as roll drying or floating drying. Such a manufacturing process for a precursor sheet can be carried out by any one of a continuous method and a batch method; however, from the viewpoints of productivity and mechanical strength of the precursor sheet, it is preferable to manufacture the precursor sheet by a continuous method.

The basis weight of the precursor sheet is preferably from 10 g/m$^2$ to 200 g/m$^2$. When the basis weight is in this range, handleability of the precursor sheet, and the gas permeability, electrical conductivity and handleability obtainable when manufactured into a porous electrode substrate can be improved. Furthermore, the thickness of the precursor sheet is preferably from 20 $\mu$m to 400 $\mu$m.

<Step (2): Step (2) of impregnating precursor sheet with carbon powder (C2) and fluorine-based resin>

Subsequently, a process of impregnating the precursor sheet with a carbon powder (C2) and a fluorine-based resin is carried out. The impregnation as used in the present exemplary embodiment means a process of causing the carbon fiber (C2) and the fluorine-based resin to infiltrate into the precursor sheet, that is, a process of inserting the carbon powder (C2) and the fluorine-based resin in between the fiber and the fiber that constituting the precursor sheet. The method for impregnating the precursor sheet with the carbon powder (C2) and the fluorine-based resin, is not particularly limited as long as it is a method capable of applying the carbon powder (C2) and the fluorine-based resin to the precursor sheet. Specifically, use can be made of, for example, a method of uniformly impregnating and coating the carbon powder (C2) and the fluorine-based resin through the precursor sheet surface using a coater; a method of uniformly impregnating and coating the carbon powder (C2) and the fluorine-based resin through the precursor sheet surface using a spraying apparatus and a dropping apparatus; and a dip-nip method using a throttling apparatus.

The number of times of impregnating the carbon powder (C2) and the fluorine-based resin into the precursor sheet (number of times of impregnation) is not particularly limited; however, it is preferable to reduce the number of times of impregnation from the viewpoint of reducing the manufacturing cost. If the number of times of impregnation is several times, the same slurry may be used for the slurries of the carbon powder (C2) and the fluorine-based resin, or slurries having different slurry concentration or different kinds or mixing ratio of the carbon powder and the fluorine-based resin may be used.

Furthermore, the amount of impregnation of the carbon powder and the fluorine-based resin in the thickness direction of the precursor sheet may be uniform, or there may be a concentration gradient. The impregnation time is not particularly limited, but for example, the impregnation time can be adjusted to 1 second to 10 minutes.

<Step (3): Step (3) of heat treating precursor sheet obtained after step (2) at temperature of 150°C or higher but lower than 400°C in presence of oxygen>

Subsequently, a process of heat treating the precursor sheet impregnated with the carbon powder (C2) and the fluorine-based resin at a temperature of 150°C or higher but lower than 400°C in the presence of oxygen, is carried out. Through this operation, fusion of the short carbon fiber (A) by the fiber (b) containing a particulate substance having a melting point of 400°C or higher is satisfactorily carried out, and joining between the short carbon fiber (A) and the fiber (b) containing a particulate substance having a melting point of 400°C or higher can be satisfactorily carried out by sintering the fluorine-based resin as a binder component. The temperature of the heat treatment is preferably 200°C or higher in order to soften and melt the fluorine-based resin, and the temperature is preferably lower than 400°C in order to suppress thermal degradation of the fluorine-based resin. That is, the temperature of the heat treatment is preferably 200°C to 400°C, and from the reason of achieving a balance between sufficient softening and melting and suppression of thermal degradation, the temperature is more preferably 300°C to 370°C.

Regarding the presence of oxygen, an atmosphere having an oxygen concentration of 5% to 80% is preferred. In view of cost, an air atmosphere can be suitably used.

The method for heat treatment is not particularly limited, but a method of performing a heat treatment using a high temperature atmosphere furnace or a far-infrared heating furnace; a method of directly heating using a hot plate, a hot roll or the like; and the like can be applied. The time for the heat treatment can be adjusted to, for example, 1 minute to 2 hours. For example, it is more preferable to carry out the operation of the heat treatment using a far-infrared heating furnace, and to perform the heat treatment at 300°C to 370°C for 1 to 5 minutes.

In the case of heat treating a precursor sheet that has been manufactured continuously, it is preferable to perform the heat treatment continuously over the entire length of the precursor sheet, from the viewpoint of reducing the manufacturing cost. When the porous electrode substrate is long, productivity of the porous electrode substrate is increased, and since the subsequent MEA (Membrane Electrode Assembly) manufacturing can also be carried out continuously, the manufacturing cost for fuel cells can be reduced. Furthermore, from the viewpoints of the productivity for the porous electrode substrate or fuel cells, and reduction of the manufacturing cost, it is preferable to continuously wind the porous electrode substrate thus manufactured.

<Step (4): Step (4) of subjecting precursor sheet to entangling treatment and forming three-dimensional entangled structure>

Subsequently, a process of subjecting the precursor sheet to an entangling treatment, and forming a three-dimensional entangled structure is carried out. This process causes entanglement of the short carbon fiber (A) and the fiber (b) containing a particulate substance having a melting point of 400°C or higher in the precursor sheet, even in the thickness direction of the precursor sheet. Entanglement is a treatment of causing intersection and entanglement, and a three-dimensional entangled structure is a structure in which fibers whose mutual positional relationship of the fibers extends not only in the planar direction of the sheet but also in the thickness direction, are mutually intersecting and mutually entangled. The entangling treatment can be carried out by any known method capable of forming a three-dimensional entangled structure. For example, a method of mutually entangling fibers by applying external force can be adopted for the entangling treatment. Regarding this method, a mechanically entangling method such as a needle punching method; a high pressure liquid injection method such as a water jet punching method; a high pressure gas injection method such as a steam jet punching method; or a method based on combinations thereof can be used. For the entangling treatment, a high pressure liquid injection method is preferred. When this method is used, breakage of the short carbon fiber (A) during the entangling process can be easily suppressed, and adequate entangleability is easily obtained. Hereinbelow, this method is explained in detail.

(High pressure liquid injection treatment method)

A high pressure liquid injection treatment method is a treatment method of entangling the short carbon fiber (A) and the fiber (b) containing a particulate substance having a melting point of 400°C or higher in the precursor sheet by mounting the precursor sheet on a supporting member having a smooth surface and striking the precursor sheet with an injected liquid (column-like flow of liquid, fan-shaped flow of liquid, slit flow of liquid, or the like). Here, regarding the supporting member having a substantially smooth surface that is used in this high pressure liquid injection treatment method, any supporting member from which the injected liquid is rapidly removed, without having the shape of the supporting member formed on the resulting entangled structure, can be selected and used as necessary. Specific examples thereof include a wire gauze having a mesh size of 30 to 200, and a plastic net or roll. It is preferable to manufacture a precursor sheet on a supporting member having a substantially smooth surface and then to perform a high pressure liquid injection treatment, from the viewpoint of productivity because a precursor sheet having an entangled structure can be manufactured continuously.

The liquid used for the high pressure liquid injection treatment may be any liquid other than a solvent that dissolves the fibers constituting the precursor sheet; however, usually, it is preferable to use water or warm water. The orifice diameter of each injection nozzle of the high pressure liquid injection nozzles is, in the case of a column-like flow, preferably from 0.01 mm to 1.0 mm, and more preferably from 0.05 mm to 0.3 mm, from the viewpoint of obtaining a sufficient entangling effect. The distance between the nozzle injection orifice and the laminated body is preferably from 0.5 cm to 5 cm. The liquid pressure is preferably 0.5 MPa or more, and more preferably 1.0 MPa or more. The entangling treatment may be carried out in a single row, or in plural rows. When the entangling treatment is carried out in plural rows, it is effective to increase the pressure of the high pressure liquid injection treatment from the second row, rather than from the first row.

The entangling treatment of the precursor sheet by high pressure liquid injection may be carried out repeatedly for several times. That is, after a high pressure liquid injection treatment of a precursor sheet is carried out, precursor sheets may be laminated, and then a high pressure liquid injection treatment may be carried out. Alternatively, a precursor sheet having an entangled structure that is in the middle of manufacturing may be reversed, and a high pressure liquid injection treatment may be carried out from the opposite side. Also, these operations may be repeated.

In the case of continuously manufacturing a precursor sheet having an entangled structure, the high pressure liquid injection nozzles having a single row or plural rows of nozzle orifices can be vibrated in the width direction of the sheet. Through this operation, formation of a striped trace pattern originating from the formation of a dense and non-dense structure of the sheet in the sheet-making direction can be easily suppressed. By suppressing a striped trace pattern in the sheet-making direction, the mechanical strength in the sheet width direction can be readily manifested. Furthermore, in the case of using plural lines of high pressure liquid injection nozzles having a single row or plural rows of nozzle orifices, a periodical pattern appearing on the precursor sheet having an entangled structure can be easily suppressed by controlling the vibration frequency at which the high pressure liquid injection nozzles are vibrated in the width direction of the sheet, or the phase difference thereof.

To specifically describe the three-dimensional entangled structure for this step (4), it is a structure in which the short carbon fiber (A) and the fiber (b) containing a particulate substance having a melting point of 400°C or higher are oriented also in the thickness direction of the precursor sheet as a result of an entangling treatment.

<Step (5): Step (5) of hot pressure molding precursor sheet at temperature of lower than 200°C>

Subsequently, a process of hot pressure molding a precursor sheet is carried out. This process is preferably carried out before the step (2) of impregnating the carbon powder (2) and the fluorine-based resin. It is because the carbon short fiber (A) is joined to the fiber (b) containing a particulate substance having a melting point of 400°C or higher, and the state that the thickness of the porous electrode substrate is uneven is alleviated. Regarding the hot pressure molding, any technology capable of evenly hot pressure molding a precursor sheet can be applied. Examples thereof include a method of bringing smooth steel plates into contact with both surfaces of the precursor sheet, and hot pressing the precursor sheet; and a method of using a roll pressing apparatus or a continuous belt pressing apparatus.

When a precursor sheet that has been continuous manufactured is subjected to hot pressure molding, a method of using a roll pressing apparatus or a continuous belt pressing apparatus is preferred. Thereby, a carbonization treatment can be carried out continuously.

The heating temperature for the hot pressure molding is preferably lower than 200°C, and more preferably 120°C to 190°C. When the heating temperature is in this range, the surface of the precursor sheet can be made smooth effectively. The molding pressure is not particularly limited as long as the pressure is larger than 2 kPa; however, if the percentage content of the fiber (b) containing a particulate substance having a melting point of 400°C or higher in the precursor sheet is large, the surface of the precursor sheet can be easily made smooth even if the molding pressure is low. Meanwhile, the molding pressure is preferably from 20 kPa to 10 MPa. When the press pressure is 10 MPa or less, destruction of the short carbon fiber (A) at the time of hot pressure molding can be easily prevented, and the structure of the porous electrode substrate becoming very dense can be easily prevented. The time for hot pressure molding can be adjusted to, for example, 1 second to 10 minutes.

When the precursor sheet is hot pressure molded by sandwiching the precursor sheet between two sheets of steel plates or using a roll pressing apparatus or a continuous belt pressing apparatus, it is preferable to have a silicone-based or fluorine-based peeling agent applied in advance on the steel plate or the belt so as to prevent the fiber (b) containing a particulate substance having a melting point of 400°C or higher from adhering, or to place a releasable paper that has been treated with a releasing agent, between the precursor sheet and the steel plate or the belt.

<Step (6): Step (6) of subjecting precursor sheet to drying treatment at temperature of 70°C or higher but lower than 150°C>

Subsequently, a process of subjecting the precursor to a drying treatment is carried out. The drying treatment is preferably carried out at a temperature of 70°C or higher but lower than 150°C. When the temperature is in this range, the dispersing solvent can be removed from the precursor sheet impregnated with a carbon powder (C2) and a fluorine-based resin. The time for the drying treatment can be appropriately selected depending on the dried state, but the drying time can be set to, for example, 1 minute to 1 hour.

The method for the drying treatment is not particularly limited; however, a heat treatment using a high temperature atmosphere furnace or a far-infrared heating furnace, or a direct heating treatment using a hot plate or a hot roll can be applied. From the viewpoint of suppressing the adhesion of the carbon powder and the fluorine-based resin to the heating source, a drying treatment using a high temperature atmosphere furnace is preferred. In the case of subjecting a precursor sheet that has been continuously manufactured to a drying treatment, it is preferable to perform the drying treatment continuously over the entire length of the precursor sheet, from the viewpoint of reducing the manufacturing cost. Thereby, the heat treatment can be carried out continuously.

In regard to the manufacturing method of the present exemplary embodiment, since the dispersed pieces of the short carbon fiber (A) are joined by the oxidized fiber (B) containing the carbon powder (C1), and the short carbon fiber (A) and the oxidized fiber (B) containing a particulate substance having a melting point of 400°C or higher (carbon black) are joined by the carbon powder (C2) and the fluorine-based resin, it is possible to emit the process of carbonization at 1000°C or higher, and the manufacturing cost can be reduced.

The porous electrode substrate according to the present exemplary embodiment can be used as, for example, a porous electrode substrate for a solid polymer fuel cell that is used in solid polymer fuel cells. Meanwhile, in the case of using the porous electrode substrate for this purpose, particularly from the viewpoint of handleability or electrical conductivity, it is preferable for the porous electrode substrate to have a structure in which the pieces of the short carbon fiber (A) in the porous electrode substrate are joined by a reticulate oxidized fiber (B) containing a particulate substrate having a melting point of 400°C or higher; the pieces of the short carbon fiber (A) are joined by a fluorine-based resin containing a carbon powder (C2); and the joined portions of the "short carbon fiber (A)" and the "reticulate oxidized fiber (B) containing a particulate substance having a melting point of 400°C or higher" are further joined by the "fluorine-based resin containing a carbon powder (C2)". Furthermore, more preferred is a porous electrode substrate having a structure in which the "short carbon fiber (A)" and the "oxidized fiber (B) containing a particulate substance having a melting point of 400°C or higher" are mutually entangled even in the thickness direction.

(Membrane-electrode assembly)

The porous electrode substrate of the present exemplary embodiment can use a membrane-electrode assembly. A membrane-electrode assembly which uses the porous electrode substrate as electrodes, respectively for a negative electrode (anode) and a positive electrode (cathode) can be configured. As a specific example, a laminated body having a catalyst layer formed on both surfaces of a membrane is formed, this laminated body is disposed between two sheets of porous electrode substrates, and the two sheets of the porous electrode substrate can be formed as a negative electrode and a positive electrode, respectively. The laminated body is appropriately selected, but for example, a laminated body in which a catalyst layer containing a platinum catalyst as a main component is formed on each of both surfaces of an electrolyte membrane formed from a fluorine-based resin having proton conductivity, can be utilized. As an example of the electrolyte membrane, a perfluorosulfonic acid-based polymer electrolyte membrane can be used. Regarding the catalyst layer, catalyst-supported carbons such as Pt (platinum), Ru (Ruthenium) or the like supported on carbon can be used.

(Solid polymer fuel cell)

The above-described membrane-electrode assembly that uses the porous electrode substrate of the present exemplary embodiment can be used in the manufacturing of a solid polymer fuel cell. The structure of the solid polymer fuel cell may be appropriately any structure in which a fuel (for example, hydrogen gas, oxygen gas, or a mixed gas containing these) is supplied to the membrane-electrode assembly, and electricity is extracted from the negative electrode and the positive electrode. In the present exemplary embodiment, the membrane-electrode assembly is sandwiched between barrier members containing carbon as a main constituent material (carbon separators), and thus a monocellular solid polymer fuel cell is obtained. On the surface of the barrier members, a structure that serves as flow channels of gas is provided, and in the present exemplary embodiment, gas flow is facilitated as the surfaces of the barrier members are in the form of bellows. In addition to that, the barrier members can adopt structures in a straight form or a zigzag form.

EXAMPLES

Hereinafter, the present invention will be described more specifically by way of Examples. The various property values in the Examples were measured by the following methods. The unit "parts" means "parts by mass".

(1) Gas permeability

Measurement of the gas permeability of a porous electrode substrate was carried out as follows. According to ISO-5636-5, the time taken by 200 mL of air to permeate was measured using a Gurley densometer, and the gas permeability ($ml/hr/cm^2/mmAq$) was calculated.

(2) Thickness

The thickness of a porous electrode substrate was measured using a thickness measuring apparatus, dial type thickness gauge (manufactured by Mitutoyo Corp., trade name: 7321), and the thickness of a portion selected randomly from a porous electrode substrate having an almost uniform thickness was measured. The size of the gauge head was set to 10 mm in diameter, and the measurement pressure was set to 1.5 kPa.

(3) Penetration direction resistance

Measurement of the electrical resistance in the thickness direction of a porous electrode substrate (penetration direction resistance) was carried out as follows. The porous electrode substrate was sandwiched between gold-plated copper plates, the porous electrode substrate was pressed vertically over the copper plates at 1 MPa, and the resistance value when an electric current was passed at a current density of 10 $mA/cm^2$ was measured. Thus, the penetration direction resistance was determined by the following formula:

$$\text{Penetration direction resistance } (m\Omega \cdot cm^2) = \text{Measured resistance value } (m\Omega) \times$$

$$\text{sample area } (cm^2).$$

(4) Percentage content of oxidized fiber (B) containing particulate substance having melting point of 400°C or higher

The percentage content of the oxidized fiber (B) containing a particulate substance having a melting point of 400°C or higher was calculated by the following formula, from the basis weight of a porous electrode substrate produced without impregnating with a particulate substance having a melting point of 400°C or higher and a fluorine-based resin, and the basis weight of the short carbon fiber (A):

$$\text{Percentage content (\%) of oxidized fiber (B) containing particulate substance}$$

$$\text{having melting point of } 400°C \text{ or higher} = [\text{Basis weight } (g/m^2) \text{ of porous electrode}$$

$$\text{substrate - basis weight } (g/m^2) \text{ of short carbon fiber (A)}] \div \text{basis weight } (g/m^2) \text{ of}$$

$$\text{porous electrode substrate} \times 100.$$

(5) Corrugation of porous electrode substrate

As an index of the corrugation of a porous electrode substrate, a porous electrode substrate having a size of 250 mm in length and 250 mm in width was placed on a flat plate, and the difference between the maximum value and the minimum value of the height of the porous electrode substrate from the flat plate was calculated.

(Manufacturing Example 1) Manufacturing of oxidized fiber precursor short fiber (b1) containing polymer having softening point of 250°C or higher but lower than 400°C and containing particulate substance having melting point of 400°C or higher (carbon powder (C1))

117 g of an acrylic polymer having a mass average molecular weight of 140,000 (softening point: 320°C) and having a composition of acrylonitrile/vinyl acetate = 93/7 (mass ratio), which was synthesized by a water-based suspension polymerization method, and 83 g of carbon black (manufactured by Mitsubishi Chemical Corp., product name: #3230B, melting point: 3550°C or higher) as a carbon powder (C1) that was a particulate substance having a melting point of 400°C or higher were mixed and dissolved in 800 g of dimethylacetamide using a three-one motor. Thus, an acrylic polymer spinning dope containing a carbon powder was prepared.

Subsequently, the mixed liquid (spinning dope) thus obtained was extruded under an added pressure of 0.1 MPa provided by nitrogen, and this spinning dope was discharged into an aqueous solution of dimethylformamide at a concentration of 30% by mass and a temperature of 35°C through a nozzle having 12,000 holes using a gear pump, to perform wet spinning. Solidified fibers thus obtained were washed while the fibers were stretched six times in boiling water, and the solvent was removed. Subsequently, the fibers were cut to a fiber length of 3 mm, and thereby an oxidized fiber precursor short fiber (b1) containing a carbon powder (C1), which contained an acrylonitrile-based polymer and had an average fiber diameter of 10 $\mu$m, was obtained.

(Manufacturing Example) Oxidized fiber precursor fiber (b2-1) containing polymer having softening point of 250°C or higher but lower than 400°C, having structure with large number of fibrils branched, and containing particulate substance having melting point of 400°C or higher.

117 g of an acrylic polymer having a mass average molecular weight of 140,000 (softening point: 320°C or higher) and having a composition of acrylonitrile/vinyl acetate = 93/7 (mass ratio), which was synthesized by a water-based suspension polymerization method, and 83 g of carbon black (manufactured by Mitsubishi Chemical Corp., product name: #3230B) (melting point: 3550°C or higher) as a particulate substance having a melting point of 400°C or higher were mixed and dissolved in 800 g of dimethylacetamide using a three-one motor. Thus, an acrylic polymer spinning dope containing a carbon powder was prepared.

Subsequently, the mixed liquid thus obtained was extruded under an added pressure of 0.1 MPa provided by nitrogen, and while quantitative supply was carried out to a flow channel 1 of the nozzle illustrated in Fig. 1 using a gear pump, simultaneously steam was supplied to a steam flow channel 4 through an inflow port 3. The amount of steam supplied was adjusted by defining the supply pressure using a pressure reduction valve. The nozzle was manufactured such that a Y-shaped solution discharge port 2, a cylindrical mixing cell 5 having a diameter of 2 mm and a length of 10 mm, and the steam flow channel 4 adjusted the degree of opening in a slit form to 390 $\mu$m, and the angle C formed by the center line A of the solution flow channel and the center line B of the slit was 60°. The amount of supply of the mixed liquid was adjusted to 36 ml/min using the nozzle, the supply pressure of steam was adjusted to 350 kPa, and the mixed liquid was ejected into water at a temperature of 30°C through a mixing cell outlet 6. An acrylonitrile-based polymer floating in the solidification bath was collected, and the polymer was washed overnight with water at room temperature and dehydrated. Thereby, an oxidized fiber precursor fiber (b2-1) containing a polymer (acrylonitrile-based polymer) having a softening point of 250°C or higher but lower than 400°C, having a structure in which a large number of fibrils were branched, and containing a particulate substance (carbon black) having a melting point of 400°C or higher was obtained. This oxidized fiber precursor fiber (b2-1) thus obtained was measured by the pulp freeness testing method (1) Canadian standard type of ISO-5267-2, and the freeness was 175 ml.

Water was added to this oxidized fiber precursor fiber (b2-1), and thus a slurry having a fiber concentration of 1% by mass was obtained. A sheet was formed using the slurry, by performing papermaking into a square which had a basis weight of 30 g/m$^2$ and measured 25 cm on each side, and drying the sheet using a drum type dryer (manufactured by Hashima Co., Ltd., product name: HP-124AP) at 130°C for a contact time of 3 minutes. The sheet thus obtained was observed by scanning electron microscopy, and it was confirmed that the fiber was in a fibrillar form.

(Manufacturing Example 3) Manufacturing of oxidized fiber precursor fiber (b2-2) containing polymer having softening point of 250°C or higher but lower than 400°C, being fibrillated by beating, and containing particulate substance having melting point of 400°C or higher.

117 g of an acrylic polymer having a mass average molecular weight of 140,000 (softening point: 320°C or higher) and having a composition of acrylonitrile/vinyl acetate = 93/7 (mass ratio), which was synthesized by a water-based suspension polymerization method, and 83 g of carbon black (manufactured by Mitsubishi Chemical Corp., product name: #3230B) (melting point: 3550°C or higher) as a particulate substance having a melting point of 400°C or higher were mixed and dissolved in 600 g of dimethylacetamide using a three-one motor. Thus, an acrylic polymer spinning dope containing a carbon powder was prepared.

Furthermore, 200 g of polymethyl methacrylate was mixed and dissolved in 600 g of dimethylacetamide using a three-one motor, and thus a polymethyl methacrylate spinning dope was prepared.

The acrylic polymer spinning dope containing a carbon powder and the polymethyl methacrylate spinning dope thus obtained respectively were mixed, and then dimethylacetamide was added thereto so as to obtain a total polymer concentration of 25% by mass. The mixture was stirred for 60 minutes at normal temperature, and then the liquid temperature was raised with a hot water jacket to a temperature of 70°C. After the liquid temperature reached 70°C, the mixture was stirred for 60 minutes.

Subsequently, the spinning dope thus obtained was heated to 80°C, and while the spinning dope was maintained at that temperature, the spinning dope was quantitatively supplied to a spinning nozzle using a gear pump. Then, spinning was carried out by a wet spinning method of discharging the spinning dope through a metal cap of the nozzle into a solidification bath (adjusted to have 30% by mass of dimethylacetatmide and 70% by mass of water), and solidifying the spinning dope, so as to achieve a total stretching ratio of 3.0 times.

Specifically, the mixed liquid thus obtained was extruded under an added pressure of 0.1 MPa provided by nitrogen, and this spinning dope was discharged into an aqueous solution of dimethylformamide at a concentration of 30% by mass and a temperature of 35°C through a nozzle having 12,000 holes using a gear pump, to perform wet spinning. Solidified fibers thus obtained were washed while the fibers were stretched three times in boiling water, and the solvent was removed. Subsequently, the fibers were cut to a fiber length of 3 mm and were subjected to a beating treatment using a disc refiner (manufactured by Kumagai Riki Kogyo Co., Ltd., trade name: KRK high concentration disc refiner, disc clearance 0.3 mm, speed of rotation 5000 rpm). Thus, an oxidized fiber precursor fiber (b2-2) containing a carbon powder (C1) and fibrillated by beating was obtained.

(Example 1)

A PAN-based carbon fiber having an average fiber diameter of 7 $\mu$m and an average fiber length of 3 mm was provided as the short carbon fiber (A). Furthermore, the oxidized fiber precursor fiber (b2-1) containing a carbon powder (C1) and fibrillated by beating, which was obtained in Manufacturing Example 2, was provided as the oxidized fiber precursor fiber (b) containing a particulate substance having a melting point of 400°C or higher.

The short carbon fiber (A) was dispersed in water to a fiber concentration of 1% (10 g/L), and was subjected to a defibration treatment through a disc refiner (manufactured by Kumagai Riki Kogyo Co., Ltd.). Thus, a defibrated slurry fiber (SA) was obtained.

The oxidized fiber precursor fiber (b2-1) was dispersed in water to a fiber concentration of 1% (10 g/L), and was subjected to a defibration treatment through a disc refiner (manufactured by Kumagai Riki Kogyo Co., Ltd.). Thus, a defibrated slurry fiber (Sb) was obtained.

Next, the defibrated slurry fiber (SA), the defibrated slurry fiber (Sb), and diluent water were weighed such that the amounts of the short carbon fiber (A) and the oxidized fiber precursor fiber (b2-1) containing a carbon powder (C1) and having a structure in which a large number of fibrils were branched were at a mass ratio of 50:50, and the solid concentration in the slurry was 1.5 g/L, and a slurry was prepared in a slurry supply tank. Furthermore, polyacrylamide was added thereto, and thus a slurry for papermaking having a viscosity of 22 mPa·s was manufactured.

As an apparatus for continuous manufacturing of a precursor sheet, use was made of a treatment apparatus composed of a sheet-like object conveying apparatus formed from a net, which has a net driving unit and a plain weave mesh made of a plastic net having a size of 60 cm in width × 585 cm in length connected in a belt form and continuously rotated; a slurry supply apparatus for papermaking having a slurry supply unit width of 48 cm and an amount of slurry supply of 30 L/min; and a reduced pressure dehydration apparatus disposed below the net.

Subsequently, the slurry for papermaking was supplied onto the plain weave mesh using a quantitative pump. The slurry for papermaking was supplied after being widely spread to a predetermined size through a flow box for rectifying the slurry for papermaking to a uniform flow. Thereafter, the slurry was dehydrated by the reduced pressure dehydration apparatus by passing through a portion for natural dehydration, and thus a precursor sheet (before entangling treatment) was obtained.

As an entangling treatment apparatus, a high pressure liquid injection treatment apparatus including three water jet nozzles (nozzles 1 to 3) as described below was disposed in the downstream of the apparatus for continuous manufacturing of a precursor sheet.

Nozzle 1: Orifice diameter φ (diameter) 0.15 mm × 501 holes, pitch between holes in the width direction 1 mm (1001 holes/1 m of width), disposed in a single row, effective nozzle width 500 mm.

Nozzle 2: Orifice diameter φ 0.15 mm × 501 holes, pitch between holes in the width direction 1 mm (1001 holes/1 m of width), disposed in a single row, effective nozzle width 500 mm.

Nozzle 3: Orifice diameter φ 0.15 mm × 1002 holes, pitch between holes in the width direction 1.5 mm, disposed in three rows, pitch between rows 5 mm, effective nozzle width 500 mm.

Subsequently, the precursor sheet described above (before entangling treatment) was loaded on the net of a pressurized water stream injection treatment apparatus. The precursor sheet (before entangling treatment) was subjected to an entangling treatment by passing the precursor sheet through nozzle 1, nozzle 2, and nozzle 3 in this order while the pressurized water stream injection pressure was set to 1 MPa (nozzle 1), a pressure of 1 MPa (nozzle 2), and a pressure of 1 MPa (nozzle 3). Thereby, an entangling treated precursor sheet (before drying) was obtained.

This entangling treated precursor sheet (before drying) was dried at 150°C for 3 minutes using a pin tenter testing machine (manufactured by Tsujii Dyeing Machine Manufacturing Co., Ltd., trade name: PT-2A-400), and thus an entangling treated precursor sheet (hereinafter, simply called a precursor sheet) having a basis weight of 40 g/m$^2$ was obtained. Meanwhile, in this entangling treated precursor sheet, the dispersed state of the short carbon fiber (A) and the oxidized fiber precursor fiber (b2-1) in the precursor sheet was observed with a microscope, and was found to be satisfactory. Entanglement of the two fibers was also satisfactory, and handleability was also satisfactory.

Subsequently, the two surfaces of that precursor sheet were sandwiched between paper coated with a silicone-based releasing agent, and then the precursor sheet was hot pressure molded for 3 minutes under the conditions of 180°C and 3 MPa with a batch pressing apparatus (step (4)).

Next, Ketjen black (manufactured by Lion Corp.) as a carbon power (C2), a polytetrafluoroethylene particle dispersion liquid (trade name: PTFE DISPERSION 31-JR, manufactured by Dupont Mitsui Fluorochemicals Co., Ltd.) as a fluorine-based resin, and polyoxyethylene octyl phenyl ether as a dispersant were provided.

A mixture of the carbon powder (C2) and the fluorine-based resin was prepared as follows, and impregnation was carried out.

An aqueous dispersion liquid prepared to contain the carbon powder (C2), the fluorine-based resin and the dispersant at proportions of 4.0% by mass, 3.0% by mass, and 4.5% by mass, respectively, was stirred for one hour with a homogenizer, and thereby a dispersion liquid of a mixture of the carbon powder (C2) and the fluorine-based resin was prepared.

The precursor sheet that had been hot pressure molded was impregnated with this dispersed aqueous solution, and then any excessive dispersed aqueous solution was removed in a nipping apparatus. Thereafter, the precursor sheet impregnated with a mixture of the carbon powder (C2) and the fluorine-based resin was dried with a batch dryer at 100°C for 20 minutes.

Thereafter, a porous electrode substrate was obtained by heat treating for one hour under the conditions of 360°C in air in a batch atmosphere furnace.

The porous electrode substrate thus obtained did not have in-plane shrinkage at the time of heat treatment, corrugation of the sheet was also as small as 1 mm or less, and the gas permeability, thickness and penetration direction resistance were respectively satisfactory. Furthermore, the percentage content of the oxidized fiber (B) containing a particulate substance having a melting point of 400°C (carbon black) was 49% by mass.

In the porous electrode substrate thus obtained, the dispersed pieces of the short carbon fiber (A) were joined by the oxidized fiber (B) containing a carbon powder (C1), and the short carbon fiber (A) and the oxidized fiber (B) containing a particulate substance having a melting point of 400°C or higher (carbon black) were joined by the carbon powder (C2) and the fluorine-based resin. Even if a compressive load of a planar pressure of 1.5 MPa was applied on the porous electrode substrate, a sheet shape could be maintained. The composition and the evaluation results of the porous electrode substrate are presented in Table 1.

(Example 2)

A porous electrode substrate (Example 2) was obtained in the same manner as in Example 1, except that the mass ratio of the short carbon fiber (A) and the oxidized fiber precursor fiber (b2-1) was set to 60:40.

The porous electrode substrate thus obtained (Example 2) did not have in-plane shrinkage at the time of heat treatment, the corrugation of the sheet was also as small as 1 mm or less, and the gas permeability, thickness and the penetration direction resistance were respectively satisfactory. Furthermore, the percentage content of the oxidized fiber (B) containing a particulate substance having a melting point of 400°C or higher (carbon black) was 39% by mass.

In the porous electrode substrate thus obtained (Example 2), the dispersed pieces of the short carbon fiber (A) were joined by the oxidized fiber (B) containing a particulate substance having a melting point of 400°C or higher (carbon black), and the short carbon fiber (A) and the oxidized fiber (B) containing a particulate substance having a melting point of 400°C or higher (carbon black) were joined by the carbon powder (C2) and the fluorine-based resin. Even if a compressive load of a planar pressure of 1.5 MPa was applied on the porous electrode substrate, a sheet shape could be maintained. The composition and the evaluation results of the porous electrode substrate are presented in Table 1.

(Example 3)

A porous electrode substrate (Example 3) was obtained in the same manner as in Example 1, except that the mass ratio of the short carbon fiber (A) and the oxidized fiber precursor fiber (b2-1) was set to 70:30.

The porous electrode substrate thus obtained (Example 3) did not have in-plane shrinkage at the time of heat treatment, the corrugation of the sheet was also as small as 1 mm or less, and the gas permeability, thickness and the penetration direction resistance were respectively satisfactory. Furthermore, the percentage content of the oxidized fiber (B) containing a particulate substance having a melting point of 400°C or higher (carbon black) was 29% by mass.

In the porous electrode substrate thus obtained (Example 3), the dispersed pieces of the short carbon fiber (A) were joined by the oxidized fiber (B) containing a particulate substance having a melting point of 400°C or higher (carbon black), and the short carbon fiber (A) and the oxidized fiber (B) containing a particulate substance having a melting point of 400°C or higher (carbon black) were joined by the carbon powder (C2) and the fluorine-based resin. Even if a compressive load of a planar pressure of 1.5 MPa was applied on the porous electrode substrate, a sheet shape could be maintained. The composition and the evaluation results of the porous electrode substrate are presented in Table 1.

(Example 4)

A porous electrode substrate (Example 4) was obtained in the same manner as in Example 1, except that the mass ratio of the short carbon fiber (A) and the oxidized fiber precursor fiber (b2-1) was set to 85:15.

The porous electrode substrate thus obtained (Example 4) did not have in-plane shrinkage at the time of heat treatment, the corrugation of the sheet was also as small as 1 mm or less, and the gas permeability, thickness and the penetration direction resistance were respectively satisfactory. Furthermore, the percentage content of the oxidized fiber (B) containing a particulate substance having a melting point of 400°C or higher (carbon black) was 15% by mass.

In the porous electrode substrate thus obtained (Example 4), the dispersed pieces of the short carbon fiber (A) were joined by the oxidized fiber (B) containing a particulate substance having a melting point of 400°C or higher (carbon black), and the short carbon fiber (A) and the oxidized fiber (B) containing a particulate substance having a melting point of 400°C or higher (carbon black) were joined by the carbon powder (C2) and the fluorine-based resin. Even if a compressive load of a planar pressure of 1.5 MPa was applied on the porous electrode substrate, a sheet shape could be maintained. The composition and the evaluation results of the porous electrode substrate are presented in Table 1.

(Example 5)

A porous electrode substrate (Example 5) was obtained in the same manner as in Example 4, except that the oxidized fiber precursor fiber (b2-2) obtained in Manufacturing Example 3 was used as the fiber (b) containing a particulate substance having a melting point of 400°C or higher (carbon black).

The porous electrode substrate thus obtained (Example 5) did not have in-plane shrinkage at the time of heat treatment, the corrugation of the sheet was also as small as 1 mm or less, and the gas permeability, thickness and the penetration direction resistance were respectively satisfactory. Furthermore, the percentage content of the oxidized fiber (B) containing a particulate substance having a melting point of 400°C or higher (carbon black) was 24% by mass.

In the porous electrode substrate thus obtained (Example 5), the dispersed pieces of the short carbon fiber (A) were joined by the oxidized fiber (B) containing a particulate substance having a melting point of 400°C or higher (carbon black), and the short carbon fiber (A) and the oxidized fiber (B) containing a particulate substance having a melting point of 400°C or higher (carbon black) were joined by the carbon powder (C2) and the fluorine-based resin. Even if a compressive load of a planar pressure of 1.5 MPa was applied on the porous electrode substrate, a sheet shape could be maintained. The composition and the evaluation results of the porous electrode substrate are presented in Table 1.

(Example 6)

A porous electrode substrate (Example 6) was obtained in the same manner as in Example 4, except that the oxidized fiber precursor short fiber (b1) obtained in Manufacturing Example 1 was used as the fiber (b) containing a particulate substance having a melting point of 400°C or higher (carbon black).

The porous electrode substrate thus obtained (Example 6) did not have in-plane shrinkage at the time of heat treatment, the corrugation of the sheet was also as small as 1 mm or less, and the gas permeability, thickness and the penetration direction resistance were respectively satisfactory. Furthermore, the percentage content of the oxidized fiber (B) containing a particulate substance having a melting point of 400°C or higher (carbon black) was 29% by mass.

In the porous electrode substrate thus obtained (Example 6), the dispersed pieces of the short carbon fiber (A) were joined by the oxidized fiber (B) containing a particulate substance having a melting point of 400°C or higher (carbon black), and the short carbon fiber (A) and the oxidized fiber (B) containing a particulate substance having a melting point of 400°C or higher (carbon black) were joined by the carbon powder (C2) and the fluorine-based resin. Even if a compressive load of a planar pressure of 1.5 MPa was applied on the porous electrode substrate, a sheet shape could be maintained. The composition and the evaluation results of the porous electrode substrate are presented in Table 1.

(Example 7)

A porous electrode substrate (Example 7) was obtained in the same manner as in Example 4, except that the oxidized fiber precursor short fiber (b1) obtained in Manufacturing Example 1, and the oxidized fiber precursor fiber (b2-1) obtained in Manufacturing Example 2 were used as the fiber (b) containing a particulate substance having a melting point of 400°C or higher (carbon black), and the mass ratio of the respective fibers used was set to 70:15:15.

The porous electrode substrate thus obtained (Example 7) did not have in-plane shrinkage at the time of heat treatment, the corrugation of the sheet was also as small as 1 mm or less, and the gas permeability, thickness and the penetration direction resistance were respectively satisfactory. Furthermore, the percentage content of the oxidized fiber (B) containing a particulate substance having a melting point of 400°C or higher (carbon black) was 29% by mass.

In the porous electrode substrate thus obtained (Example 7), the dispersed pieces of the short carbon fiber (A) were joined by the oxidized fiber (B) containing a particulate substance having a melting point of 400°C or higher (carbon black), and the short carbon fiber (A) and the oxidized fiber (B) containing a particulate substance having a melting point of 400°C or higher (carbon black) were joined by the carbon powder (C2) and the fluorine-based resin. Even if a compressive load of a planar pressure of 1.5 MPa was applied on the porous electrode substrate, a sheet shape could be maintained. The composition and the evaluation results of the porous electrode substrate are presented in Table 1.

(Example 8)

A porous electrode substrate (Example 8) was obtained in the same manner as in Example 4, except that a dispersion liquid of a mixture of the carbon powder (C2) and the fluorine-based resin was prepared such that the proportions of the carbon powder (C2), the fluorine-based resin and the dispersant were 4.0% by mass, 4.0% by mass, and 4.5% by mass, respectively.

The porous electrode substrate thus obtained (Example 8) did not have in-plane shrinkage at the time of heat treatment, the corrugation of the sheet was also as small as 1 mm or less, and the gas permeability, thickness and the penetration direction resistance were respectively satisfactory. Furthermore, the percentage content of the oxidized fiber (B) containing a particulate substance having a melting point of 400°C or higher (carbon black) was 29% by mass.

In the porous electrode substrate thus obtained (Example 8), the dispersed pieces of the short carbon fiber (A) were joined by the oxidized fiber (B) containing a particulate substance having a melting point of 400°C or higher (carbon black), and the short carbon fiber (A) and the oxidized fiber (B) containing a particulate substance having a melting point of 400°C or higher (carbon black) were joined by the carbon powder (C2) and the fluorine-based resin. Even if a compressive load of a planar pressure of 1.5 MPa was applied on the porous electrode substrate, a sheet shape could be maintained. The composition and the evaluation results of the porous electrode substrate are presented in Table 1.

(Example 9)

A porous electrode substrate (Example 9) was obtained in the same manner as in Example 4, except that Ketjen black (manufactured by Lion Corp.) and pyrolytic graphite (trade name: PC-H, manufactured by Ito Graphite Co., Ltd.) were used as the carbon powder (C2), and the ratio (mass ratio) thereof was set to 90:10.

The porous electrode substrate thus obtained (Example 9) did not have in-plane shrinkage at the time of heat treatment, the corrugation of the sheet was also as small as 1 mm or less, and the gas permeability, thickness and the penetration direction resistance were respectively satisfactory. Furthermore, the percentage content of the oxidized fiber (B) containing a particulate substance having a melting point of 400°C or higher (carbon black) was 29% by mass.

In the porous electrode substrate thus obtained (Example 9), the dispersed pieces of the short carbon fiber (A) were joined by the oxidized fiber (B) containing a particulate substance having a melting point of 400°C or higher (carbon black), and the short carbon fiber (A) and the oxidized fiber (B) containing a particulate substance having a melting point of 400°C or higher (carbon black) were joined by the carbon powder (C2) and the fluorine-based resin. Even if a compressive load of a planar pressure of 1.5 MPa was applied on the porous electrode substrate, a sheet shape could be maintained. The composition and the evaluation results of the porous electrode substrate are presented in Table 1.

(Example 10)

A porous electrode substrate (Example 10) was obtained in the same manner as in Example 1, except that an entangling treatment by a high pressure liquid injection treatment was not carried out.

The porous electrode substrate thus obtained did not have in-plane shrinkage at the time of heat treatment, the corrugation of the sheet was also as small as 1 mm or less, and the gas permeability, thickness and the penetration direction resistance were respectively satisfactory. Furthermore, the percentage content of the oxidized fiber (B) containing a particulate substance having a melting point of 400°C or higher (carbon black) was 49% by mass.

In the porous electrode substrate thus obtained (Example 10), the dispersed pieces of the short carbon fiber (A) were joined by the oxidized fiber (B) containing a particulate substance having a melting point of 400°C or higher (carbon black), and the short carbon fiber (A) and the oxidized fiber (B) containing a particulate substance having a melting point of 400°C or higher (carbon black) were joined by the carbon powder (C2) and the fluorine-based resin. Even if a compressive load of a planar pressure of 1.5 MPa was applied on the porous electrode substrate, a sheet shape could be maintained. The composition and the evaluation results of the porous electrode substrate are presented in Table 1.

(Example 11)

A porous electrode substrate (Example 11) was obtained in the same manner as in Example 1, except that a hot pressure molding treatment was not carried out.

The porous electrode substrate thus obtained (Example 11) did not have in-plane shrinkage at the time of heat treatment, the corrugation of the sheet was also as small as 1 mm or less, and the gas permeability, thickness and the penetration direction resistance were respectively satisfactory. Furthermore, the percentage content of the oxidized fiber (B) containing a particulate substance having a melting point of 400°C or higher (carbon black) was 49% by mass.

In the porous electrode substrate thus obtained (Example 11), the dispersed pieces of the short carbon fiber (A) were joined by the oxidized fiber (B) containing a particulate substance having a melting point of 400°C or higher (carbon black), and the short carbon fiber (A) and the oxidized fiber (B) containing a particulate substance having a melting point of 400°C or higher (carbon black) were joined by the carbon powder (C2) and the fluorine-based resin. Even if a compressive load of a planar pressure of 1.5 MPa was applied on the porous electrode substrate, a sheet shape could be maintained. The composition and the evaluation results of the porous electrode substrate are presented in Table 1.

(Example 12)

A porous electrode substrate (Example 12) was obtained in the same manner as in Example 1, except that after the precursor sheet was impregnated with a mixture of the carbon powder (C2) and the fluorine-based resin, the precursor sheet was not subjected to a drying treatment.

The porous electrode substrate thus obtained (Example 12) did not have in-plane shrinkage at the time of heat treatment, the corrugation of the sheet was also as small as 1 mm or less, and the gas permeability, thickness and the penetration direction resistance were respectively satisfactory. Furthermore, the percentage content of the oxidized fiber (B) containing a particulate substance having a melting point of 400°C or higher (carbon black) was 49% by mass.

In the porous electrode substrate thus obtained (Example 12), the dispersed pieces of the short carbon fiber (A) were joined by the oxidized fiber (B) containing a particulate substance having a melting point of 400°C or higher (carbon black), and the short carbon fiber (A) and the oxidized fiber (B) containing a particulate substance having a melting point of 400°C or higher (carbon black) were joined by the carbon powder (C2) and the fluorine-based resin. Even if a compressive load of a planar pressure of 1.5 MPa was applied on the porous electrode substrate, a sheet shape could be maintained. The composition and the evaluation results of the porous electrode substrate are presented in Table 1.

(Example 13)

(1) Manufacturing of membrane-electrode assembly (MEA)

Two sets of the porous electrode substrate obtained in Example 4 were prepared as porous electrode substrates for the use as a cathode and an anode. Furthermore, a laminated body in which a catalyst layer (catalyst layer area: 25 cm$^2$, amount of Pt attachment: 0.3 mg/cm$^2$) formed from a catalyst-supported carbon (catalyst: Pt, amount of catalyst supported: 50% by mass) was formed on both surfaces of a perfluorosulfonic acid-based polymer electrolyte membrane (membrane thickness: 30 $\mu$m), was obtained. This laminated body was interposed between the porous electrode substrates for cathode and anode, and these were joined. Thus, a MEA was obtained.

(2) Evaluation of fuel cell characteristics of MEA

The obtained MEA is sandwiched between two carbon separators having a bellows-shaped gas flow channel, thereby forming a solid polymer fuel cell (simple cell).

An evaluation of the fuel cell characteristics was carried out by measuring the current density-voltage characteristics of this simple cell. Hydrogen gas was used as a fuel gas, and air was used as an oxidizing gas. The temperature of the simple cell was set to 80°C, the fuel gas utilization ratio was set to 60%, and the oxidizing gas utilization ratio was set to 40%. Furthermore, humidification of the fuel gas and the oxidizing gas was carried out by passing the fuel gas and the oxidizing gas respectively through a bubbler at 80°C. As a result, the cell voltage of the fuel cell at a current density of 0.8 A/cm$^2$ was 0.584 V, and the internal resistance of the cell was 4.8 m$\Omega$. Thus, the simple cell exhibited satisfactory characteristics.

(Comparative Example 1)

An oxidized fiber precursor fiber which had a structure in which a large number of fibrils were branched, and did not contain a particulate substance having a melting point of 400°C or higher was obtained in the same manner as in Manufacturing Example 2, except that an acrylonitrile-based polymer spinning dope that did not use a particulate substance having a melting point of 400° or higher, used an acrylonitrile-based polymer and dimethylacetamide in amounts of incorporation of 150 g and 850 g, respectively, and did not include a carbon powder (C1), was prepared, and this spinning dope was used. Furthermore, a porous electrode substrate (Comparative Example 1) was obtained in the same manner as in Example 1, except that this oxidized fiber precursor fiber that had a structure in which a large number of fibrils were branched, and did not contain a particulate substance having a melting point of 400°C or higher was used.

The porous electrode substrate thus obtained (Comparative Example 1) had satisfactory gas permeability and thickness; however, the porous electrode substrate had in-plane shrinkage at the time of heat treatment, and the corrugation of the sheet was 3 mm, which was higher compared with Example 1. The penetration direction resistance was also higher compared with Example 1. Furthermore, the percentage content of the oxidized fiber (B') that did not contain a particulate substance having a melting point of 400°C or higher was 49% by mass.

In the porous electrode substrate thus obtained (Comparative Example 1), the dispersed pieces of the short carbon fiber (A) were joined by the oxidized fiber (B') that did not contain a particulate substance having a melting point of 400°C or higher, and the short carbon fiber (A) and the oxidized fiber (B') that did not contain a particulate substance having a melting point of 400°C or higher were joined by the carbon powder (C2) and the fluorine-based resin. Even if a compressive load of a planar pressure of 1.5 MPa was applied on the porous electrode substrate, a sheet shape could be maintained. The composition and the evaluation results of the porous electrode substrate are presented in Table 1.

(Comparative Example 2)

A porous electrode substrate (Comparative Example 2) was obtained in the same manner as in Example 1, except that a heat treatment was carried out without impregnating a dispersion liquid of a mixture of the carbon powder (C2) and the fluorine-based resin.

The porous electrode substrate thus obtained (Comparative Example 2) did not have in-plane shrinkage at the time of heat treatment, the corrugation of the sheet was also as small as 1 mm or less, and the gas permeability and thickness were respectively satisfactory. However, the penetration direction resistance was higher compared with Example 1. Furthermore, the percentage content of the oxidized fiber (B) containing a particulate substance having a melting point of 400°C or higher was 49% by mass.

In the porous electrode substrate thus obtained (Comparative Example 2), the dispersed pieces of the short carbon fiber (A) were joined by the oxidized fiber (B) containing a particulate substance having a melting point of 400°C or higher. Even if a compressive load of a planar pressure of 1.5 MPa was applied on the porous electrode substrate, a sheet shape could be maintained. The composition and the evaluation results of the porous electrode substrate are presented in Table 1.

(Comparative Example 3)

A polyvinylidene fluoride fiber having a structure in which a large number of fibrils were branched was obtained in the same manner as in Manufacturing Example 2, except that a polyvinylidene fluoride (manufactured by Atofina Chemicals, Inc., trade name: KYNAR9000) was used instead of the acrylonitrile-based polymer. Furthermore, a porous electrode substrate (Comparative Example 3) was obtained in the same manner as in Example 1, except that this polyvinylidene fluoride fiber having a structure in which a large number of fibrils were branched, and containing a particulate substance having a melting point of 400°C or higher was used.

In the porous electrode substrate thus obtained (Comparative Example 3), the amount of deformation of the plyvinylidene fluoride fiber at the time of heat treatment was large, the thickness and corrugation could not be suppressed, and the corrugation of the sheet was 10 mm or higher, which was very high compared with Example 1. Thus, it was difficult to incorporate the porous electrode substrate into a fuel cell, and the porous electrode substrate could not be used as a porous electrode substrate for a fuel cell.

[Table 1]

| | Precursor sheet | | | | | | | | Porous electrode substrate | | | | |
|---|---|---|---|---|---|---|---|---|---|---|---|---|---|
| | | Oxidized fiber precursor fiber (b) containing carbon powder (C1) | | | Fibrillar oxidized fiber precursor fiber not containing carbon powder | | | | | | | | |
| | | | Fibrillar oxidized fiber precursor fiber | | | | | | | | | | |
| | | | (b2) | | | | | | | | | | |
| | Short carbon fiber (A) | Oxidized fiber precursor short fiber (b1) | Oxidized fiber precursor fiber having large number of fibrils branched (b2-1) | Oxidized fiber precursor fiber fibrillated by beating (b2-2) | Oxidized fiber precursor having large number of fibrils branched | Basis weight | Carbon powder (C2) | Fluorine-based resin | Basis weight | Thickness | Oxidized fiber (B) containing carbon powder (C1) | Gas permeability | Penetration direction resistance |
| | (parts) | (parts) | (parts) | (parts) | (parts) | (g/m$^2$) | (mass%) | (mass%) | (g/m$^2$) | ($\mu$m) | (%) | (ml/hr/cm$^2$/mmAq) | (m$\Omega \cdot$cm$^2$) |
| Example 1 | 50 | 0 | 50 | 0 | 0 | 40 | 4.0 | 3.0 | 55 | 135 | 49 | 5800 | 21.5 |
| Example 2 | 60 | 0 | 40 | 0 | 0 | 40 | 4.0 | 3.0 | 56 | 137 | 39 | 6200 | 18.8 |
| Example 3 | 70 | 0 | 30 | 0 | 0 | 40 | 4.0 | 3.0 | 55 | 135 | 29 | 7000 | 16.2 |
| Example 4 | 85 | 0 | 15 | 0 | 0 | 40 | 4.0 | 3.0 | 56 | 138 | 15 | 8500 | 15.1 |
| Example 5 | 70 | 0 | 0 | 30 | 0 | 40 | 4.0 | 3.0 | 54 | 136 | 24 | 7500 | 16.8 |
| Example 6 | 70 | 30 | 0 | 0 | 0 | 40 | 4.0 | 3.0 | 53 | 133 | 29 | 7100 | 16.3 |
| Example 7 | 70 | 15 | 15 | 0 | 0 | 40 | 4.0 | 3.0 | 55 | 138 | 29 | 7100 | 16.1 |
| Example 8 | 70 | 0 | 30 | 0 | 0 | 40 | 4.0 | 3.0 | 55 | 134 | 29 | 8800 | 17.3 |
| Example 9 | 70 | 0 | 30 | 0 | 0 | 40 | 4.0 | 3.0 | 55 | 135 | 29 | 6500 | 15.3 |
| Example 10 | 70 | 0 | 30 | 0 | 0 | 40 | 4.0 | 3.0 | 55 | 138 | 49 | 6600 | 16.9 |
| Example 11 | 70 | 0 | 30 | 0 | 0 | 40 | 4.0 | 3.0 | 54 | 160 | 49 | 8800 | 22.2 |
| Example 12 | 70 | 0 | 30 | 0 | 0 | 40 | 4.0 | 3.0 | 55 | 137 | 49 | 6200 | 16.1 |

| | Precursor sheet | | | | | | | | Porous electrode substrate | | | | |
| | Short carbon fiber (A) | Oxidized fiber precursor fiber (b) containing carbon powder (C1) | | | Fibrillar oxidized fiber precursor fiber not containing carbon powder | Basis weight | Carbon powder (C2) | Fluorine-based resin | Basis weight | Thickness | Oxidized fiber (B) containing carbon powder (C1) | Gas permeability | Penetration direction re-sistance |
| | | Oxidized fiber pre-cursor short fiber (b1) | Fibrillar oxidized fiber precursor fiber | | | | | | | | | | |
| | | | (b2) | | | | | | | | | | |
| | | | Oxidized fiber pre-cursor fib-er having large number of fibrils branched (b2-1) | Oxidized fiber pre-cursor fib-er fibrillat-ed by beating (b2-2) | Oxidized fiber precursor having large number of fibrils branched | | | | | | | | |
| | (parts) | (parts) | (parts) | (parts) | (parts) | (g/m$^2$) | (mass%) | (mass%) | (g/m$^2$) | ($\mu$m) | (%) | (ml/hr/cm$^2$/mmAq) | (m$\Omega\cdot$cm$^2$) |
| Comparative Example 1 | 50 | 0 | 0 | 0 | 50 | 40 | 4.0 | 3.0 | 55 | 135 | (49) | 6600 | 26.2 |
| Comparative Example 2 | 50 | 0 | 50 | 0 | 0 | 40 | - | - | 39 | 138 | - | 15000 | 160 |

(Example 14)

A porous electrode substrate (Example 14) was obtained in the same manner as in Example 10, except that a hot pressure molding treatment was not carried out.

The porous electrode substrate thus obtained (Example 14) did not have in-plane shrinkage at the time of heat treatment, the corrugation of the sheet was also as small as 2 mm or less, and the gas permeability, thickness and the penetration direction resistance were respectively satisfactory. Furthermore, the percentage content of the oxidized fiber (B) containing a carbon powder (C1) was 49% by mass.

In the porous electrode substrate thus obtained (Example 14), the dispersed pieces of the short carbon fiber (A) were joined by the oxidized fiber (B) containing a carbon powder (C1), and the short carbon fiber (A) and the oxidized fiber (B) containing a carbon powder (C1) were joined by the carbon powder (C2) and the fluorine-based resin. Even if a compressive load of a planar pressure of 1.5 MPa was applied on the porous electrode substrate, a sheet shape could be maintained.

(Example 15)

A porous electrode substrate (Example 15) was obtained in the same manner as in Example 14, except that a process of performing a drying treatment was not carried out.

The porous electrode substrate thus obtained (Example 15) did not have in-plane shrinkage at the time of heat treatment, the corrugation of the sheet was also as small as 2 mm or less, and the gas permeability, thickness and the penetration direction resistance were respectively satisfactory. Furthermore, the percentage content of the oxidized fiber (B) containing a carbon powder (C1) was 49% by mass.

In the porous electrode substrate thus obtained (Example 15), the dispersed pieces of the short carbon fiber (A) were joined by the oxidized fiber (B) containing a carbon powder (C1), and the short carbon fiber (A) and the oxidized fiber (B) containing a carbon powder (C1) were joined by the carbon powder (C2) and the fluorine-based resin. Even if a compressive load of a planar pressure of 1.5 MPa was applied on the porous electrode substrate, a sheet shape could be maintained.

(Comparative Example 4)

A porous electrode substrate (Comparative Example 4) was obtained in the same manner as in Example 1, except that the carbon powder (C2) was not used, and only a dispersion liquid of the fluorine-based resin was used for impregnation.

The porous electrode substrate thus obtained (Comparative Example 4) did not have in-plane shrinkage at the time of heat treatment, the corrugation of the sheet was also as small as 2 mm or less, and the gas permeability and thickness were respectively satisfactory. However, the penetration direction resistance was higher compared with Example 1. Furthermore, the percentage content of the oxidized fiber (B) containing a particulate substance having a melting point of 400°C or higher was 49% by mass.

In the porous electrode substrate thus obtained (Comparative Example 4), the dispersed pieces of the short carbon fiber (A) were joined by the oxidized fiber (B) containing a carbon powder (C1), and the short carbon fiber (A) and the oxidized fiber (B) containing a carbon powder (C1) were joined by the fluorine-based resin. Even if a compressive load of a planar pressure of 1.5 MPa was applied on the porous electrode substrate, a sheet shape could be maintained.

EXPLANATIONS OF LETTERS OR NUMERALS

1 FLOW CHANNEL FOR SPINNING DOPE FOR SPLIT FIBER PRODUCTION
2 DISCHARGE PORT FOR SPINNING DOPE FOR SPLIT FIBER PRODUCTION
3 INFLOW PORT FOR STEAM
4 SLIT-SHAPED STEAM FLOW CHANNEL
5 MIXING CELL UNIT
6 OUTLET OF MIXING CELL UNIT
A DISCHARGE LINE OF SPINNING DOPE FOR SPLIT FIBER PRODUCTION
B INJECTION LINE OF STEAM
C ANGLE FORMED BY A AND B

**Claims**

1.  A method for manufacturing a porous electrode substrate, the method comprising:

    step (1) of dispersing the pieces of a short carbon fiber (A) and a fiber (b) containing a polymer having a softening point of 250° or higher but lower than 400°C and a particulate substance having a melting point of 400°C or higher, in a planar direction, and thereby obtaining a precursor sheet;
    step (2) of impregnating the precursor sheet with a carbon powder (C2) containing powdered carbon, and a fluorine-based resin; and
    step (3) of heat treating the impregnated precursor sheet at a temperature of 250°C or higher but lower than 400°C in the presence of oxygen.

2.  The manufacturing method according to claim 1, further comprising, between the step (1) and the step (2), step (4) of performing an entangling treatment of forming a three-dimensional entangled structure in which the fibers are mutually entangled, by applying external force to the fibers of the precursor sheet.

3.  The manufacturing method according to claim 1, further comprising, between the step (1) and the step (2), step (5) of hot pressure molding the precursor sheet by heating at a temperature lower than 200°C and pressing at a pressure of 20 kPa to 10 MPa.

4.  The manufacturing method according to claim 2, further comprising, between the step (4) and the step (2), step (5) of hot pressure molding the precursor sheet by heating at a temperature lower than 200°C and pressing at a pressure of 20 kPa to 10 MPa.

5.  The manufacturing method according to any one of claims 1 to 4, further comprising, between the step (2) and the step (3), step (6) of subjecting the precursor sheet to a drying treatment at a temperature of 70°C or higher but lower than 150°C.

6.  The manufacturing method according to any one of claims 1 to 5, wherein the fiber (b) is an oxidized fiber precursor fiber (b1) that is oxidized by the heat treatment or a fibrillar oxidized precursor fiber (b2) having a core portion, and a fibril portion in which fibers are branched from the core portion.

7.  The method for manufacturing a porous electrode substrate according to any one of claims 1 to 6, wherein the particulate substance is a carbon powder (C1) containing carbon, and wherein preferably the carbon powder (C1) is carbon black.

8.  The manufacturing method according to any one of claims 1 to 7, wherein the carbon powder (C2) contains carbon black or graphite powder.

9.  The method for manufacturing a porous electrode substrate according to any one of claims 1 to 8, wherein the method does not comprising a process of carbonizing at a temperature of 1000°C or higher.

10. A porous electrode substrate selected from (i) and (ii):

    (i) a porous electrode substrate manufactured by the manufacturing method according to any one of claims 1 to 9;
    (ii) a porous electrode substrate, comprising a short carbon fiber (A); an oxidized fiber (B) containing a polymer having a softening point of 250°C or higher but lower than 400°C and a particulate substance having a melting point of 400°C or higher; a carbon powder (C2) containing powdered carbon; and a fluorine-based resin,

    the porous electrode substrate having a site in which pieces of the short carbon fiber (A) are mutually joined by means of the oxidized fiber (B).

11. The porous electrode substrate according to claim 10, item (ii), further having a site in which the pieces of the short carbon fiber (A) are mutually joined by means of the fluorine-based resin.

12. The porous electrode substrate according to claim 10, item (ii), or claim 11, further having a site in which the pieces of the short carbon fiber (A) and the oxidized fiber (B) are mutually joined by the fluorine-based resin.

13. The porous electrode substrate according to any one of claims 10, item (ii), claim 11 or claim 12, wherein when the porous electrode substrate is placed on a flat plate to have a size of 250 mm in length and 250 mm in width, the difference between the maximum value and the minimum value of the height from the flat plate is 2 mm or less.

14. The porous electrode substrate according to any one of claims 10, item (ii), to 13, wherein the gas permeability per unit thickness is from 750 ml/hr/cm$^2$/mmAq·mm to 2000 ml/hr/cm$^2$/mmAq; the penetration direction resistance per unit thickness is 0.18 mΩ·cm$^2$/mm or less; and the ratio of the gas permeability and the penetration direction resistance is 260 ml/hr/cm$^2$/mmAq/mΩ·cm$^2$ or more.

15. The porous electrode substrate according to any one of claims 10, item (ii), to 14, wherein the porous electrode substrate is a three-dimensional entangled structured body having a structure in which the strands of the oxidized fiber (B) are mutually three-dimensionally entangled with one another.

16. A membrane-electrode assembly, comprising the porous electrode substrate according to any one of claims 10, item (ii), to 15.

17. A solid polymer fuel cell, comprising the membrane-electrode assembly according to claim 16.


**Patentansprüche**

1. Verfahren zur Herstellung eines porösen Elektrodensubstrats, wobei das Verfahren die folgenden Schritte umfasst:

   einen Schritt (1), in dem die Stücke einer kurzen Kohlenstofffaser (A) und einer Faser (b), die ein Polymer mit einem Erweichungspunkt von 250°C oder höher, aber niedriger als 400°C und eine partikelförmige Substanz mit einem Schmelzpunkt von 400°C oder höher umfasst, in einer ebenen Richtung dispergiert werden, um einen Vorläuferbogen zu erhalten;
   einen Schritt (2), in dem der Vorläuferbogen mit einem Kohlenstoffpulver (C2), das pulverförmigen Kohlenstoff umfasst, und einem Fluorharz imprägniert wird; und
   einen Schritt (3), in dem der imprägnierte Vorläuferbogen bei einer Temperatur von 250°C oder höher, aber niedriger als 400°C in Gegenwart von Sauerstoff wärmebehandelt wird.

2. Verfahren zur Herstellung gemäß Anspruch 1, ferner umfassend zwischen dem Schritt (1) und dem Schritt (2), einen Schritt (4), in dem eine Verfilzungsbehandlung zur Bildung einer dreidimensional verfilzten Struktur, in der die Fasern miteinander verfilzt sind, durchgeführt wird, indem eine externe Kraft auf die Fasern ausgeübt wird.

3. Verfahren zur Herstellung gemäß Anspruch 1, ferner umfassend zwischen dem Schritt (1) und dem Schritt (2), einen Schritt (5), in dem der Vorläuferbogen durch Erhitzen bei einer Temperatur die niedriger ist als 200°C und Pressen bei einem Druck von 20 kPa bis 10 MPa warmpressgeformt wird.

4. Verfahren zur Herstellung gemäß Anspruch 2, ferner umfassend zwischen dem Schritt (4) und dem Schritt (2), einen Schritt (5), in dem der Vorläuferbogen durch Erhitzen bei einer Temperatur die niedriger ist als 200°C und Pressen bei einem Druck von 20 kPa bis 10 MPa warmpressgeformt wird.

5. Verfahren zur Herstellung gemäß einem der Ansprüche 1 bis 4, ferner umfassend zwischen dem Schritt (2) und dem Schritt (3), einen Schritt (6), in dem der Vorläuferbogen einer Trocknungsbehandlung bei einer Temperatur von 70°C oder höher, aber niedriger als 150°C unterzogen wird.

6. Verfahren zur Herstellung gemäß einem der Ansprüche 1 bis 5, wobei die Faser (b) eine oxidierte Faservorläuferfaser (b1) ist, die durch die Wärmebehandlung oxidiert wird oder eine feinfaserige oxidierte Vorläuferfaser (b2) ist, die einen Kernabschnitt und einen feinfaserigen Abschnitt, in dem Fasern von dem Kernabschnitt abzweigen, aufweist.

7. Verfahren zur Herstellung eines porösen Elektrodensubstrats gemäß einem der Ansprüche 1 bis 6, wobei die partikelförmige Substanz ein Kohlenstoff umfassendes Kohlenstoffpulver (C1) ist, und wobei das Kohlenstoffpulver (C1) vorzugsweise Ruß ist.

8. Verfahren zur Herstellung gemäß einem der Ansprüche 1 bis 7, wobei das Kohlenstoffpulver (C2) Ruß oder Graphitpulver umfasst.

9. Verfahren zur Herstellung eines porösen Elektrodensubstrats gemäß einem der Ansprüche 1 bis 8, wobei das Verfahren keinen Carbonisierungsprozess bei einer Temperatur von 1000°C oder höher umfasst.

10. Poröses Elektrodensubstrat, ausgewählt aus (i) und (ii):

(i) poröses Elektrodensubstrat, hergestellt durch das Verfahren zur Herstellung gemäß einem der Ansprüche 1 bis 9;
(ii) poröses Elektrodensubstrat, umfassend:

eine kurze Kohlenstofffaser (A);
eine oxidierte Faser (B), umfassend ein Polymer mit einem Erweichungspunkt von 250°C oder höher, aber niedriger als 400°C und eine partikelförmige Substanz mit einem Schmelzpunkt von 400°C oder höher;
ein Kohlenstoffpulver (C2), das pulverförmigen Kohlenstoff umfasst; und
ein Fluorharz,

wobei das poröse Elektrodensubstrat eine Stelle aufweist, an der Stücke der kurzen Kohlenstofffaser (A) durch die oxidierte Faser (B) miteinander verbunden sind.

11. Poröses Elektrodensubstrat gemäß Anspruch 10, Punkt (ii), das ferner eine Stelle aufweist, an der die Stücke der kurzen Kohlenstofffaser (A) durch das Fluorharz miteinander verbunden sind.

12. Poröses Elektrodensubstrat gemäß Anspruch 10, Punkt (ii) oder Anspruch 11, das ferner eine Stelle aufweist, an der die Stücke der kurzen Kohlenstofffaser (A) und die oxidierte Faser (B) durch das Fluorharz miteinander verbunden sind.

13. Poröses Elektrodensubstrat gemäß einem der Ansprüche 10, Punkt (ii), Anspruch 11 oder Anspruch 12, wobei, wenn das poröse Elektrodensubstrat auf einer flachen Platte in einer Abmessung von 250 mm in der Länge und 250 mm in der Breite angeordnet ist, beträgt die Differenz zwischen dem Maximalwert und dem Minimalwert der Höhe von der flachen Platte 2 mm oder weniger.

14. Poröses Elektrodensubstrat gemäß einem der Ansprüche 10, Punkt (ii) bis 13,
wobei die Gaspermeabilität pro Einheitsdicke 750 ml/h/cm$^2$/mmAq·mm bis 2000 ml/h/cm$^2$/mmAq beträgt;
der Durchtrittrichtungswiderstand ("penetration direction resistance") pro Einheitsdicke 0,18 m$\Omega$cm$^2$/mm oder weniger beträgt; und
das Verhältnis von Gaspermeabilität zu Durchtrittrichtungswiderstand 260 ml/h/cm$^2$/mmAq/m$\Omega$cm$^2$ oder mehr beträgt.

15. Poröses Elektrodensubstrat gemäß einem der Ansprüche 10, Punkt (ii) bis 14, wobei das poröse Elektrodensubstrat ein dreidimensional verfilzter, strukturierter Körper ist, der eine Struktur aufweist, in der die Stränge der oxidierten Faser (B) gegenseitig dreidimensional miteinander verfilzt sind.

16. Membranelektrodenanordnung, umfassend das poröse Elektrodensubstrat gemäß einem der Ansprüche 10, Punkt (ii) bis 15.

17. Festpolymerbrennstoffzelle, umfassend die Membranelektrodenanordnung gemäß Anspruch 16.

**Revendications**

1. Procédé de fabrication d'un substrat d'électrode poreux, le procédé comprenant :

- une étape (1) de dispersion des fragments d'une fibre de carbone courte (A) et d'une fibre (b) contenant un polymère ayant un point de ramollissement de 250° ou supérieur, mais inférieur à 400°C, et une substance particulaire ayant un point de fusion de 400°C ou supérieur, dans une direction plane, et ainsi d'obtention d'une feuille de précurseur;
- une étape (2) d'imprégnation de la feuille de précurseur avec une poudre de carbone (C2) contenant du carbone en poudre, et une résine à base de fluor; et
- une étape (3) de traitement thermique de la feuille de précurseur imprégnée à une température de 250°C ou supérieure, mais inférieure à 400°C, en présence d'oxygène.

2.  Procédé de fabrication selon la revendication 1, comprenant en outre, entre l'étape (1) et l'étape (2), l'étape (4) de mise en oeuvre d'un traitement d'enchevêtrement pour former une structure enchevêtrée tridimensionnelle dans laquelle les fibres sont enchevêtrées les unes avec les autres, en appliquant une force externe sur les fibres de la feuille de précurseur.

3.  Procédé de fabrication selon la revendication 1, comprenant en outre, entre l'étape (1) et l'étape (2), une étape (5) de moulage sous pression à chaud de la feuille de précurseur par chauffage à une température inférieure à 200°C, et de compression à une pression de 20 kPa à 10 MPa.

4.  Procédé de fabrication selon la revendication 2, comprenant en outre, entre l'étape (4) et l'étape (2), une étape (5) de moulage sous pression à chaud de la feuille de précurseur par chauffage à une température inférieure à 200°C, et de compression à une pression de 20 kPa à 10 MPa.

5.  Procédé de fabrication selon l'une quelconque des revendications 1 à 4, comprenant en outre, entre l'étape (2) et l'étape (3), une étape (6) de soumission de la feuille de précurseur à un traitement de séchage à une température de 70°C ou supérieure, mais inférieure à 150°C.

6.  Procédé de fabrication selon l'une quelconque des revendications 1 à 5, dans lequel la fibre (b) est une fibre précurseur de fibre oxydée (b1) qui est oxydée par le traitement thermique ou une fibre précurseur oxydée fibrillaire (b2) ayant une portion de noyau et une portion de fibrille dans laquelle les fibres sont ramifiées à partir de la partie de noyau.

7.  Procédé de fabrication d'un substrat poreux d'électrode selon l'une quelconque des revendications 1 à 6, dans lequel la substance particulaire est une poudre de carbone (C1) contenant du carbone, et dans lequel de préférence la poudre de carbone (C1) est du noir de carbone.

8.  Procédé de fabrication selon l'une quelconque des revendications 1 à 7, dans lequel la poudre de carbone (C2) contient du noir de carbone ou de la poudre de graphite.

9.  Procédé de fabrication d'un substrat poreux d'électrode selon l'une quelconque des revendications 1 à 8, dans lequel le procédé ne comprend pas de procédé de carbonisation à une température de 1000°C ou supérieure.

10. Substrat d'électrode poreux choisi parmi (i) et (ii) :

    - (i) un substrat d'électrode poreux fabriqué par le procédé de fabrication selon l'une quelconque des revendications 1 à 9 ;
    - (ii) un substrat d'électrode poreux, comprenant une fibre de carbone courte (A) ; une fibre oxydée (B) contenant un polymère ayant un point de ramollissement de 250°C ou supérieur, mais inférieur à 400°C, et une substance particulaire ayant un point de fusion de 400°C ou supérieur; une poudre de carbone (C2) contenant du carbone en poudre ; et une résine à base de fluor,
    - le substrat d'électrode poreux ayant un emplacement dans lequel des fragments de la fibre de carbone courte (A) sont joints mutuellement au moyen de la fibre oxydée (B).

11. Substrat d'électrode poreux selon la revendication 10, point (ii), comportant en outre un emplacement dans lequel les fragments de la fibre de carbone courte (A) sont joints mutuellement au moyen de la résine à base de fluor.

12. Substrat d'électrode poreux selon la revendication 10, point (ii), ou selon la revendication 11, comportant en outre un emplacement dans lequel les fragments de la fibre de carbone courte (A) et la fibre oxydée (B) sont joints mutuellement au moyen de la résine à base de fluor.

13. Substrat poreux d'électrode selon l'une quelconque des revendications 10, point (ii), ou selon la revendication 11 ou 12, dans lequel, lorsque le substrat d'électrode poreux est placé sur une plaque plate pour avoir une taille de 250 mm de longueur et 250 mm de largeur, la différence entre la valeur maximale et la valeur minimale de la hauteur par rapport à la plaque plate est de 2 mm ou inférieure.

14. Substrat d'électrode poreux selon l'une quelconque des revendications 10, point (ii), à 13, dans lequel la perméabilité au gaz par unité d'épaisseur est de 750 ml/h/cm$^2$/mmAq·mm à 2 000 ml/h/cm$^2$/mmAq ; la résistance au sens de pénétration par unité d'épaisseur est de 0,18 mΩ·cm$^2$/mm ou inférieure ; et le rapport de la perméabilité au gaz et de la résistance au sens de pénétration est de 260 ml/h/cm$^2$/mmAq/mΩ·cm$^2$ ou supérieur.

15. Substrat d'électrode poreux selon l'une quelconque des revendications 10, point (ii), à 14, dans lequel le substrat d'électrode poreux est un corps structuré tridimensionnel enchevêtré ayant une structure dans laquelle les brins de la fibre oxydée (B) sont mutuellement enchevêtrés en trois dimensions les uns avec les autres.

16. Ensemble membrane-électrode, comprenant le substrat d'électrode poreux selon l'une quelconque des revendications 10, point (ii), à 15.

17. Cellule à combustible en polymère solide, comprenant l'ensemble membrane-électrode selon la revendication 16.

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2001056103 A
- JP 2006143478 A
- WO 2002042534 A
- JP 2007273466 A
- JP 2004363018 A
- JP 2008503043 W
- EP 2506352 A1